# EUROPÄISCHE PATENTSCHRIFT

(11) **EP 3 501 028 B1**
(45) Veröffentlichungstag und Bekanntmachung des Hinweises auf die Patenterteilung: **24.06.2020**
(21) Anmeldenummer: 18704881.4
(22) Anmeldetag: 24.01.2018
(51) Int. Cl.: G21C 13/024, G21C 19/303, G21D 1/02, G21F 9/02, G21C 13/02, G21C 9/004, G21C 13/10

(54) **KERNTECHNISCHE ANLAGE MIT EINEM VENTINGSYSTEM**
NUCLEAR FACILITY COMPRISING A VENTING SYSTEM
INSTALLATION NUCLÉAIRE COMPORTANT UN SYSTÈME DE PURGE

(30) Priorität: 24.01.2017 DE 102017201115
(43) Veröffentlichungstag der Anmeldung: 26.06.2019
(73) Patentinhaber: Framatome GmbH, 91052 Erlangen (DE)
(72) Erfinder: FUTH, Fabian, 63512 Hainburg (DE); HUTTERER, Christian, 63743 Aschaffenburg (DE); LOSCH, Norbert, 63071 Offenbach (DE)
(74) Vertreter: Lavoix
(86) Internationale Anmeldenummer: PCT/EP2018/051719
(87) Internationale Veröffentlichungsnummer: WO 2018/138142

(56) Entgegenhaltungen:
- DE-A1- 3 637 795
- DE-A1- 3 729 501
- US-A- 5 223 209
- US-A1- 2014 010 340

## Beschreibung

Die Erfindung betrifft eine kerntechnische Anlage mit einem Ventingsystem. Sie betrifft ferner ein zugehöriges Betriebsverfahren für das Ventingsystem.

Ein Ventingsystem mit den Merkmalen des Oberbegriffs von Anspruch 1 ist aus der Patentschrift US 5 223 209 A bekannt.

Dort ist nämlich ein Kernkraftwerk offenbart mit einem Containment und mit einem Ventingsystem zur gefilterten Druckentlastung des Containments, wobei
- das Ventingsystem eine aus dem Containment in die Umgebung geführte Ventleitung aufweist, in die ein Nasswäscher für den sich beim Venting einstellenden Ventstrom geschaltet ist,
- der Nasswäscher einen bereits während des Bereitschaftszustandes vor dem Venting mit einer Waschflüssigkeit gefüllten Pool aufweist, über dem sich ein Gasraum befindet,
- die Ventleitung eine in den Nasswäscher geführte Eintrittsleitung für den Ventstrom umfasst, die sich in einem Verteiler in eine Mehrzahl von Austrittsdüsen verzweigt, und
- sämtliche Austrittdüsen in die Waschflüssigkeit im Pool eintauchen.

Bei einem derartigen System trifft zu Beginn des Ventings der vergleichsweise heiße Ventstrom auf die deutlich kältere Waschflüssigkeit im Pool des Nasswäschers. Dadurch kann es zur Kondensation von im Ventstrom enthaltenen Wasserdampf und zum Verlust einer durch den Wasserdampf bewirkten Inertisierung kommen. Dies wiederum kann zur Folge haben, dass zumindest in der Anfangsphase des Ventings sich kritische Konzentrationen zündfähiger Wasserstoffhaltiger Gasgemische, die im Ventstrom mitgeführt werden, innerhalb des Ventingsystems aufbauen.

Aufgabe der Erfindung ist es, diesbezüglich Abhilfe zu schaffen, und ein Ventingsystem der genannten Art derart weiterzuentwickeln, dass bei gering gehaltenem apparativen und verfahrenstechnischen Aufwand kritische Konzentrationen zündfähiger Gasgemische in allen Betriebszuständen noch zuverlässiger als bislang vermieden sind.

Diese Aufgabe wird erfindungsgemäß gelöst durch eine kerntechnische Anlage mit einem Ventingsystem mit den Merkmalen des Anspruchs 1.

Wesentlich ist demnach, dass zumindest eine separate Austrittsöffnung vorhanden ist, die über eine Zweigleitung an die Eintrittsleitung oder an den Verteiler angeschlossen ist, und die zumindest während des Bereitschaftszustandes des Ventingsystems, vorzugsweise auch noch im Anfahrbetrieb, thermisch von der Waschflüssigkeit im Pool isoliert ist.

Mit anderen Worten wird ein Teilstrom vom Ventstrom abgezweigt und unter Umgehung der bislang gebräuchlichen Austrittsdüsen derart in den Nasswäscher eingeleitet, dass er bei beim Verlassen der separaten Austrittsöffnung keine direkte, unmittelbare Wechselwirkung mit der Waschflüssigkeit im Pool hat, und/oder die dem Teilstrom zugeordnete Teilmenge an Waschflüssigkeit mit direktem Kontakt zu ihm vergleichsweise schnell vorgewärmt werden kann. Dadurch werden das Problem der anfänglichen plötzlichen Abkühlung an der Waschflüssigkeit und eine damit einhergehende Wasserdampfkondensation für den abgezweigten Teilstrom weitgehend vermieden und für den Ventstrom insgesamt reduziert. Andere, vergleichsweise aufwändige Maßnahmen zur Beherrschung des Wasserstoffproblems werden so vermieden oder zumindest in Bezug auf den erforderlichen Umfang begrenzt. Eine geringfügige Verschlechterung der anfänglichen Rückhalteeffizienz für im Ventstrom mitgeführte Radionuklide kann durch zusätzliche Filtermittel vergleichsweise einfach kompensiert werden.

In einer ersten Hauptvariante der Erfindung wird der Teilstrom durch einen Trockenfilter geleitet und anschließend in den Gasraum oberhalb des Waschflüssigkeitspools ausgeblasen. In der Zweigleitung für den Teilstrom ist vorteilhafterweise ein anfänglich geöffnetes Absperrventil eingesetzt, das beim Übergang vom Anfahrbetrieb in den stationären Ventbetrieb - nachdem sich die Waschflüssigkeit hinreichend aufgewärmt hat, so dass keine nennenswerte Wasserdampfkondensation mehr erfolgt - bevorzugt auf passive Weise geschlossen wird.

In einer zweiten Hauptvariante der Erfindung wird der Teilstrom durch zumindest eine separate Austrittsdüse in einen Raumbereich ausgeblasen, der durch Trennwände von der Waschflüssigkeit im Pool separiert ist. Die separate(n) Austrittsdüse(n) ist (sind) bevorzugt (jeweils) eine Venturidüse, der vorteilhafterweise Waschflüssigkeit aus einem eigens zugeordneten, vergleichsweise kleinen Reservoir passiv zugeführt wird, so dass ein Trockenlaufen vermieden ist. Das für den anfänglichen Betrieb benötigte kleine Volumen an Waschflüssigkeit lässt sich im Gegensatz zu dem großen Volumen im Pool leicht auf passive Weise vorheizen bzw. im laufenden Betrieb rekuperativ beheizen, so dass auch hier wieder eine nennenswerte Wasserdampfkondensation vermieden wird. In einer bevorzugten Ausgestaltung wird die anfängliche räumliche Trennung der dem Teilstrom zugeordneten Austrittsdüse von den anderen Austrittsdüsen im Pool zumindest teilweise aufgehoben, nachdem sich die Waschflüssigkeit im Pool auf ein zur Vermeidung von Wasserdampfkondensation notwendiges Maß erwärmt hat. Dies geschieht bevorzugt durch temperaturabhängig auslösende passive Betätigungsmittel, die geeignete Überströmöffnungen freigeben.

Weitere vorteilhafte Ausgestaltungen und Kombinationsmöglichkeiten finden sich in den Unteransprüchen sowie in der nachfolgenden detaillierten Beschreibung von Ausführungsbeispielen, die auf die beigefügten Zeichnungen Bezug nehmen.
FIG. 1 gibt einen schematischen Überblick über ein erfindungsgemäßes Ventingsystem in einem Kernkraftwerk.
FIG. 2 bis 4 zeigen Details einer ersten Hauptvariante der Erfindung in drei verschiedenen Ausprägungen.
FIG. 5 und 6 zeigen Details einer zweiten Hauptvariante der Erfindung in zwei verschiedenen Ausprägungen.
FIG. 7 zeigt Details einer weiteren Variante, die Elemente aus den vorherigen Figuren kombiniert.
FIG. 8 zeigt Details einer weiteren Variante, welche Abwandlungen gegenüber den Varianten gemäß FIG. 5 und 6 beinhaltet.

Gleiche oder gleich wirkende Teile sind in allen Figuren mit denselben Bezugszeichen versehen.

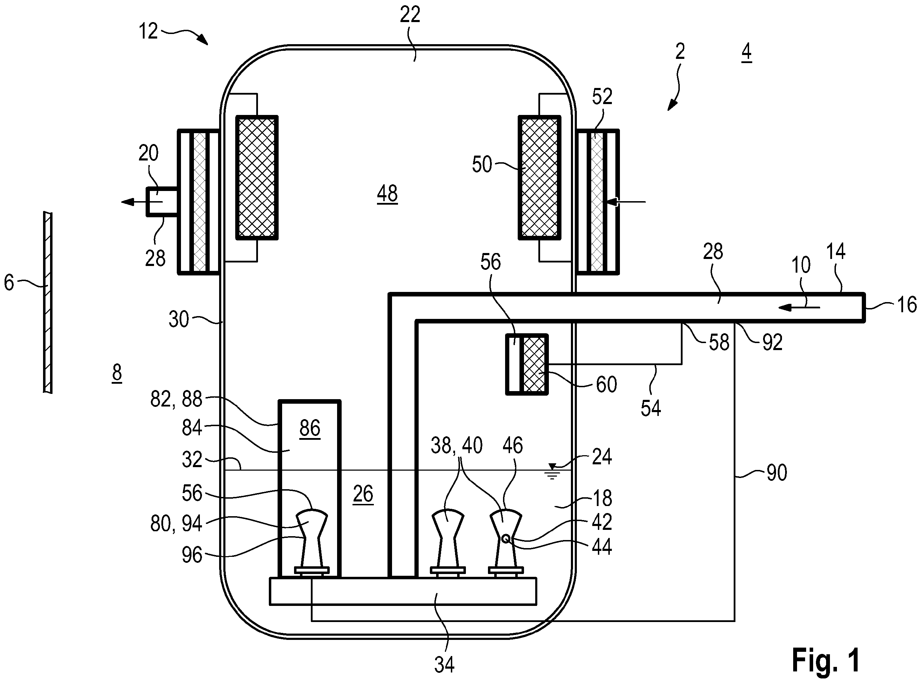

FIG. 1 gibt einen schematischen Überblick über wesentliche Komponenten eines erfindungsgemäßen Ventingsystems 2 für ein Kernkraftwerk 4.

Das Kernkraftwerk 4 besitzt eine die nuklearen Komponenten hermetisch umschließende Sicherheitshülle, die auch als Containmenthülle 6 bezeichnet wird. Der umschlossene Innenraum wird Containment 8 genannt. Manchmal, je nach Zusammenhang, bezeichnet der Begriff Containment 8 aber auch in Kurzform die Containmenthülle 6 oder die Gesamtheit von Containmenthülle 6 und umschlossenem Innenraum.

Bei einem schweren Störfall mit Freisetzung von radioaktiven Partikeln, Gasen und Dampf im Containment 8 und damit einhergehendem Druckanstieg ist eine Druckentlastung des Containments 8 durch Ausblasen von Containmentatmosphäre in die Umgebung vorgesehen. Dadurch wird verhindert, dass der Auslegungsdruck der Containmenthülle 6 überschritten wird. Das Ausblasen erfolgt bevorzugt passiv unter Ausnutzung des vorherrschenden Druckgefälles vom Containment 8 zur Umgebung als Antrieb. Zur Minimierung der Umweltbelastung beinhaltet der als Venting bezeichnete Ausblasvorgang eine Filterung und Aktivitätsrückhaltung für den ausgeblasenen, mit Radionukliden beladenen Gas-/ Dampfstrom, der auch Druckentlastungsstrom, Dampfstrom oder Ventstrom 10 genannt wird. Zu diesem Zweck kommt ein Ventingsystem 2 mit entsprechenden Filterkomponenten zum Einsatz, welches im englischsprachigen Raum als Filtered Containment Venting System oder kurz FCVS bekannt ist.

Im vorliegenden Fall weist das Ventingsystem 2 einen vorzugsweise im Containment 8 aufgestellten Nasswäscher 12 für den Ventstrom 10 auf. Das grundlegende Funktionsprinzip lässt sich wie folgt charakterisieren: Während des Ventings wird über eine Eintrittsleitung 14 der an der Eintrittsöffnung 16 aus der Containmentatmosphäre entnommene Ventstrom in den Nasswäscher 12 geleitet und durch eine darin vorhandene Vorlage von Waschflüssigkeit 18 geführt. Durch den direkten Kontakt von Ventstrom 10 und Waschflüssigkeit 18 mit zwischenzeitlicher Vermischung kommt es zu einer Einlagerung von im Ventstrom 10 mitgeführten radioaktiven Partikeln, elementarem Iod, lodverbindungen und Aerosolen in der Waschflüssigkeit 18. Die Radioaktivität wird dadurch überwiegend im Nasswäscher 12 zurückgehalten, während der gereinigte gasförmige Anteil des Ventstroms 10 nach Entmischung von der Waschflüssigkeit 18 über eine Austrittsleitung 20 aus dem Naschwäscher 12 austritt. Von dort wird der Ventstrom 10, gegebenenfalls nach Durchquerung weiterer Filter- und Reinigungsstufen sowie einer Drossel, in die Umgebung geleitet.

Der Naschwäscher 12 weist einen allseitig druckdicht gegenüber seiner Umgebung verschlossenen Behälter 22 von beispielsweise zylindrischer Gestalt mit kalottenförmigem Boden und Deckel auf, der bereits im Bereitschaftszustand (Standby-Betrieb) des Ventingsystems 2, also vor Einleitung des Ventings, in einem unteren Bereich bis zu einer vorgegebenen Füllstandshöhe 24 mit einer Waschflüssigkeit 18 gefüllt ist. Dabei handelt es sich vorzugsweise um eine überwiegend wässrige Flüssigkeit, die mit geeigneten chemischen Reagenzien zur Steigerung des Aktivitätsrückhaltevermögens versetzt sein kann. Das heißt, im unteren Teil des Behälters 22 bildet ein zusammenhängender Raumbereich einen Pool 26 von Waschflüssigkeit 18.

Die Eintrittsleitung 14 für den Ventstrom 10 ist Bestandteil einer aus dem Containment 8 durch die Containmenthülle 6 ins Freie geführten Druckentlastungsleitung oder Ventleitung 28. Die Eintrittsleitung 14 ist durch eine Durchführung in der Behälterwand 30 in den Innenraum des Behälters 22 geführt und mündet dort in einen vorzugsweise unterhalb des Flüssigkeitsspiegels 32 angeordneten Verteiler 34. Im Verteiler 34 wird der in Strömungsrichtung gemäß den Strömungspfeilen eintretende Ventstrom auf eine Anzahl von, vorzugsweise mehrere Austrittsdüsen 38 verteilt, welche zumindest teilweise von der Waschflüssigkeit 18 direkt umgeben sind oder in sie eintauchen.

Bevorzugt handelt es sich bei den Austrittsdüsen 38 um Venturidüsen 40. Die jeweilige Venturidüse 40 umfasst eintrittsseitig einen sich verengenden Konus, austrittsseitig einen sich erweiternden Konus und dazwischen eine auch Kehle 42 bezeichnete Verengung. Im Bereich der Kehle 42 befinden sich eine oder mehrere Durchtrittsöffnungen 44 (hier nur schematisch für eine der Düsen angedeutet) in der Düsenwand, durch die während des Ventings der die Venturidüse 40 durchströmende Ventstrom 10 aufgrund des Venturi-Effekts Waschflüssigkeit 18 aus dem umliegenden Pool 26 ansaugt und mitreißt. Durch die innige Wechselwirkung des Ventstroms 10 mit den mitgerissenen Tröpfchen der Waschflüssigkeit 18 kommt es, insbesondere bei hohen Strömungsgeschwindigkeiten von z. B. > 200 m/s des Ventstroms 10 innerhalb der Venturidüse 40, zur gewünschten Einlagerung der mit Radionukliden belasteten Partikel und Aerosole sowie von gasförmigem Iod und lodverbindungen in die Waschflüssigkeit 18.

Das Gemisch aus Ventstrom 10 und Waschflüssigkeit 18 tritt durch die Austrittsöffnung 46 aus der Venturidüse 40 aus. Die Austrittsöffnung 46 kann wie hier dargestellt unterhalb des Flüssigkeitsspiegels 32, alternativ auch oberhalb davon angeordnet sein. Im erstgenannten Fall kann die Austrittsöffnung 46 abweichend von der hier gezeigten Anordnung für eine Ausströmung nach unten oder zur Seite in die Waschflüssigkeit 18 orientiert sein. Im letztgenannten Fall erfolgt das Ausblasen in den oberhalb der Flüssigkeitsoberfläche befindlichen Gasraum 48. In diesem Fall ist die Venturidüse 40 mindestens mit ihrer Kehle 42 in die Waschflüssigkeit 18 eingetaucht.

Anstelle von Venturidüsen 40 können auch andersartige Austrittsdüsen 38 oder Austrittsöffnungen am Ende der Eintrittsleitung 14 angeordnet sein, welche zumindest teilweise in die Waschflüssigkeit 18 eintauchen und dadurch eine direkte Wechselwirkung zwischen dem Ventstrom 10 und der Waschflüssigkeit 18 ermöglichen. Es ist auch möglich, verschiedenartige Austrittsöffnungen oder -düsen nebeneinander anzuordnen, welche in strömungsmäßiger Parallelschaltung vom Verteiler 34 abzweigen. Abweichend von der hier gezeigten Anordnung kann der Verteiler 34 auch oberhalb des Flüssigkeitsspiegels 32 der Waschflüssigkeit 18 angeordnet sein. Der Verteiler 34 kann auch mehrere räumlich getrennte Subverteiler umfassen, welche beispielsweise an verschiedenen Stellen von der Eintrittsleitung 14 abzweigen.

Stromabwärts der Austrittsdüsen 38 kommt es zu einer Entmischung des gasförmigen Anteils des Ventstroms 10 von der Waschflüssigkeit 18. Die ausgeworfene Waschflüssigkeit 18 sammelt sich wieder im Pool 26, während die Gase sich im oberhalb des Flüssigkeitsspiegels 32 im Behälter 22 befindlichen Gasraum 48 sammeln, um anschließend über eine an den Behälter 22 angeschlossene Austrittsleitung 20 abzuströmen.

Im Strömungsweg zwischen der Waschflüssigkeit 18 und der Austrittsleitung 20 im Behälter 22 sind vorteilhafterweise (hier nicht dargestellte) passive Trockner oder Flüssigkeitsabscheider angeordnet, die dem Ventstrom 10 Feuchte entziehen, welche insbesondere durch die vorherige Wechselwirkung mit der Waschflüssigkeit 18 vorhanden sein kann. Die so aus dem Ventstrom 18 abgeschiedene Flüssigkeit wird vorteilhafterweise in den Pool 26 im Behälter 22 zurückgeführt. Bei den Trocknern kann es sich beispielsweise um Lamellenabscheider oder Fliehkraftabscheider, etwa vom Typ Zyklonabscheider, handeln.

Weiterhin können verschiedene Filtereinheiten im Strömungsweg zwischen der Waschflüssigkeit 18 und der Austrittsleitung 20 im Behälter 22 angeordnet sein, vorzugsweise stromabwärts der oben beschriebenen Trockner oder Abscheider. Beispielsweise kann ein Metall-Faser-Filter 50 vorhanden sein, dem ein Molekularsieb-Filter 52 vor- oder nachgeschaltet ist, oder auch nur einer dieser beiden Filtertypen. Die Trockner / Abscheider / Filter können wir hier dargestellt baulich in den Behälter 22 des Naschwäschers 12 integriert oder außen an ihn angesetzt sein. Alternativ können sie individuell in unterschiedlichen Kombinationen oder alle zusammen in die Austrittsleitung 20 heraus verlagert sein.

Die Austrittsleitung 20 ist Bestand der durch die Containmenthülle 6 in die Umgebung geführten Ventleitung 28. Stromabwärts des Naschwäschers 12 ist vorzugsweise eine (hier nicht dargestellte) Drossel in die Ventleitung 28 geschaltet, die vorteilhafterweise für einen konstanten Volumenstrom im Gleitdruckbetrieb (wegen des im Verlauf des Ventings abnehmenden Drucks im Containment 8) durch sogenannte kritische Entspannung ausgelegt ist und die gewünschten hohen Strömungsgeschwindigkeiten des Ventstroms 10 im Bereich der Venturidüsen 40 sicherstellt. Das Prinzip und die zu seiner Verwirklichung notwendigen strukturellen Maßnahmen sind ausführlich in der früheren Patentschrift DE 103 28 773 B3 der AREVA GmbH (seinerzeit Framatome ANP GmbH) beschrieben.

Beim Anfahren des Ventingbetriebs nach vorherigem Standby trifft der vergleichsweise heiße Ventstrom 10 im Nasswäscher 12 auf eine vergleichsweise kalte (Temperatur üblicherweise 10 bis 25 °C) Waschflüssigkeit 18 im Pool 26, die sich aufgrund ihres großen Volumens (üblicherweise in der Spannbreite 7 bis 21 m³, vorzugsweise etwa 10 m³, im Extremfall bis zu 50 m³) nur langsam erwärmt und ihre Temperatur an den Ventstrom 10 angleicht.

Dieses Risiko besteht typsicherweise für etwa 15 bis 30 Minuten, bis eine ausreichende Aufheizung der Waschflüssigkeit 18 angenommen werden kann. Eine ausreichende Inertisierung ist üblicherweise bei einer Temperatur von ca. 95 °C anzunehmen, wobei der Bereich in Abhängigkeit von den Gas-Bedingungen im Containment auch bei 85 bis 120 °C liegen kann.

Infolge dessen kann es in der Anfangsphase, also insbesondere in den ersten 15 bis 30 Minuten, zu einer signifikanten Kondensation von im Ventstrom 10 enthaltenem Wasserdampf kommen. Da der Wasserdampf inertisierend wirkt, geht eine ursprünglich vorhandene Inertisierung dabei möglicherweise verloren. Dadurch wiederum kann die Konzentration von im Ventstrom 10 ebenfalls vorhandenen zündfähigen Bestandteilen, vor allem Wasserstoff in Verbindung mit Sauerstoff, über ein kritisches Maß hinaus ansteigen, so dass in den stromabwärts der Austrittsdüsen 38 liegenden Leitungsabschnitten und Behältern des Ventingsystems 2 ein signifikant erhöhtes Zünd- oder Explosionsrisiko besteht.

Zur Vermeidung derartiger Risiken ist das erfindungsgemäße Ventingsystem 2 mit einer Reihe von apparativen und verfahrenstechnischen Maßnahmen ausgestatten, die individuell, in beliebiger Kombination miteinander oder alle zusammen verwirklicht sein können. Diese Maßnahmen werden im Folgenden genauer beschrieben.

Eine erste Hauptmaßnahme besteht darin, dass ein Teilstrom des Ventstroms 10 unter Umgehung der in den Pool 26 des Nasswäschers 12 eintauchenden Austrittsdüsen 38 direkt in den oberhalb der Waschflüssigkeit 18 befindlichen Gasraum 48 ausgeblasen wird. Dadurch wird für diesen Teilstrom der zur Wasserdampfkondensation führende Effekt einer plötzlichen Abkühlung oder Abschreckung an der Waschflüssigkeit 18 vermieden. Dadurch wird insgesamt die Kondensationsrate des in den Behälter 22 einströmenden Ventstroms 10 herabgesetzt, so dass die Konzentration zündfähiger Gasgemische bei hinreichend großer Dimensionierung des Teilstroms in Relation zum Hauptstrom, der wie bislang durch die Austrittsdüsen 38 strömt und dabei unmittelbar mit der Waschflüssigkeit 18 im Pool 26 wechselwirkt, unter dem kritischen Wert bleibt (d. h. Wasserstoff unter 4 Vol.% und Sauerstoff unter 5 Vol.% bzw. Inertgasanteil über 50 bis 55 Vol.%).

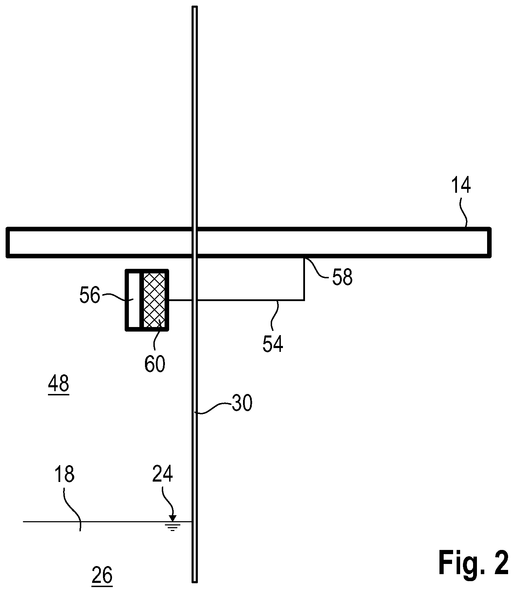

Zur technischen Umsetzung dieses Konzepts kann, wie in FIG. 1 im Überblick und in FIG. 2 im Detail dargestellt, von der (Haupt-) Eintrittsleitung 14 eine Zweigleitung abzweigen, die austrittsseitig in den Gasraum 48 mündet. Das heißt die Austrittsöffnung 56 der Zweigleitung 54 liegt im Gasraum 48 oberhalb des Flüssigkeitsspiegels 32. Abweichend von der Darstellung in den Figuren kann die Verzweigung 58 auch innerhalb des Behälters 22 liegen. Möglich ist es auch, die Verzweigung 48 in den Verteiler 34 zu integrieren.

Indem der abgezweigte Teilstrom die Waschflüssigkeit 18 im Pool 26 umgeht, ist für ihn die Rückhalterate in Bezug auf die radioaktiven Bestandteile herabgesetzt. Um diesen Nachteil zu kompensieren, ist in die Zweigleitung 54 ein Trockenfilter 60 eingesetzt. Der Trockenfilter 60 kann wie hier dargestellt am Ende der Zweigleitung 54 im Behälter 22 angeordnet sein oder alternativ weiter stromaufwärts, ggf. auch außerhalb des Behälters 22, jedoch stromabwärts der Verzweigung 58.

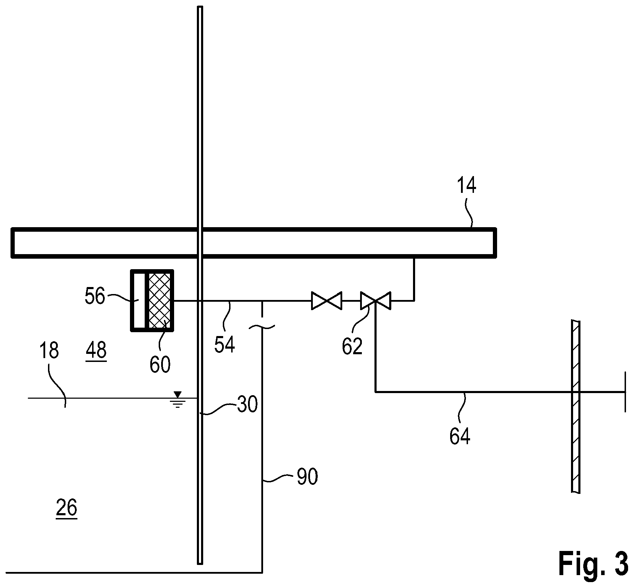

Vorteilhafterweise ist in die Zweigleitung 54 ein Absperrventil 62 geschaltet, mittels dessen die Zweigleitung 54 geschlossen werden kann. Dies ist in FIG. 3 dargestellt. Nach Beendigung des Anfahrvorgangs bei Übergang in den Dauerventbetrieb ist nämlich die Temperatur der Waschflüssigkeit 18 im Pool 26 so weit erhöht, dass der oben beschriebene Abkühlungseffekt entfällt oder in seiner Wirkung vernachlässigbar ist. Dann kann der Teilstrom durch die Zweigleitung 54 entfallen und stattdessen der gesamte Ventstrom 10 durch die (Haupt-) Eintrittsleitung 14 zu den Austrittsdüsen 38 im Pool 26 geleitet werden. Das heißt, die Zweigleitung 54 ist nur während einer ersten, vergleichsweise kurzen Phase des Ventings geöffnet und wird danach geschlossen. Vorteilhafterweise ist die Aufnahme- oder Rückhaltekapazität des Trockenfilters 60 an diese Betriebsdauer der Zweigleitung 54, welche sich bei der konkreten Systemauslegung überschlagsmäßig abschätzen lässt, angepasst.

Das Schließen des anfänglich geöffneten Absperrventils 60 kann im einfachsten Fall manuell erfolgen. Alternativ geschieht dies durch Antriebsmittel, die beispielsweise über eine durch die Containmenthülle 6 zu einem Leitstand geführte elektrische oder hydraulische oder pneumatische Steuerleitung 64 angesteuert werden. Möglich ist auch eine in der Nähe des Absperrventils 62 angeordnete oder in das Absperrventil 62 integrierte Ansteuerung mit eigener, autarker Stromversorgung.

Besonders vorteilhaft ist die Verwendung passiver Antriebs- und Ansteuermittel für das Absperrventil 62. Beispielsweise kann eine von der Temperatur der Waschflüssigkeit 18 im Pool 26 oder von einer anderen charakteristischen Temperatur innerhalb des Ventingsystems 2 abhängige passive Ansteuerung unter Verwendung von Bimetallen und/oder Formgedächtnismaterialien und/oder Schmelzloten und/oder solche oder ähnliche Elemente aufweisenden Thermostatventilen erfolgen. Als passive Antriebe kommen beispielhaft vorgespannte Federelemente oder in Druckgasflaschen bevorratete, unter Druck stehende Fluide in Betracht. Elektrische Antriebe, die ihre Betriebsspannung aus Batterien oder Akkumulatoren oder aus passiven Energiequellen wie beispielsweise thermoelektrischen Generatoren beziehen, sind ebenfalls möglich. In manchen Ausführungen können Antrieb und Ansteuerung durch ein- und dieselbe Komponente verwirklicht sein.

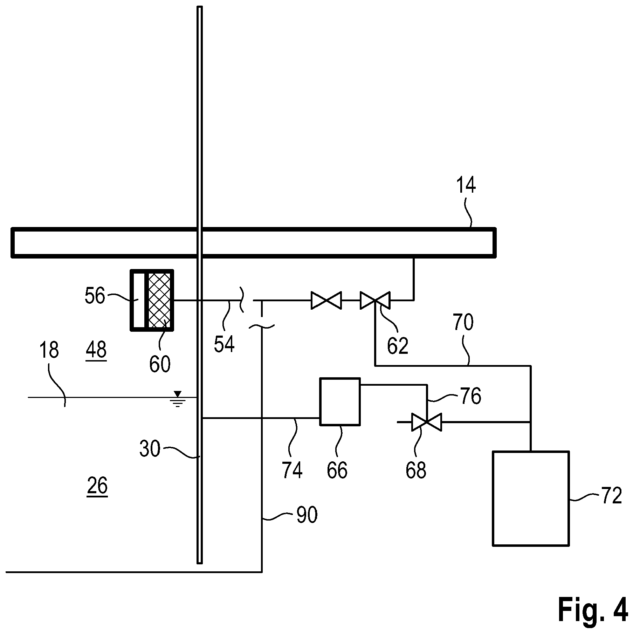

In dem in FIG. 4 gezeigten Beispiel steuert ein sogenannter Pressure Pulse Transmitter (PPT) 66, der thermisch an die Waschflüssigkeit 18 im Pool 26 angekoppelt ist, ein Steuerventil 68 an, dass in eine Steuerleitung 70 geschaltet ist, die an eine Druckgasflasche 72 mit beispielsweise einem Stickstoffvorrat angeschlossen ist. Bei dem PPT 66 handelt es sich um eine spezielle Art von Wärmetauscher mit einer Primärleitung 74, die im vorliegenden Fall mit der Waschflüssigkeit 18 im Pool 26 kommuniziert, und mit einer Sekundärleitung 76, die im vorliegenden Fall mit dem Steuerventil 68 kommuniziert. Je nach Temperatur der Waschflüssigkeit 18 wird damit ein Betriebsdruck in der Sekundärleitung 76 aufgebaut, der das Steuerventil 76 entweder öffnet (bei niedrigen Temperaturen) oder schließt (bei hohen Temperaturen oberhalb einer vorgegebenen Schwelle) - und damit über das in der Steuerleitung 70 unter Druck stehende Stickstoffgas auch das Absperrventil 62 in der Zweigleitung 54.

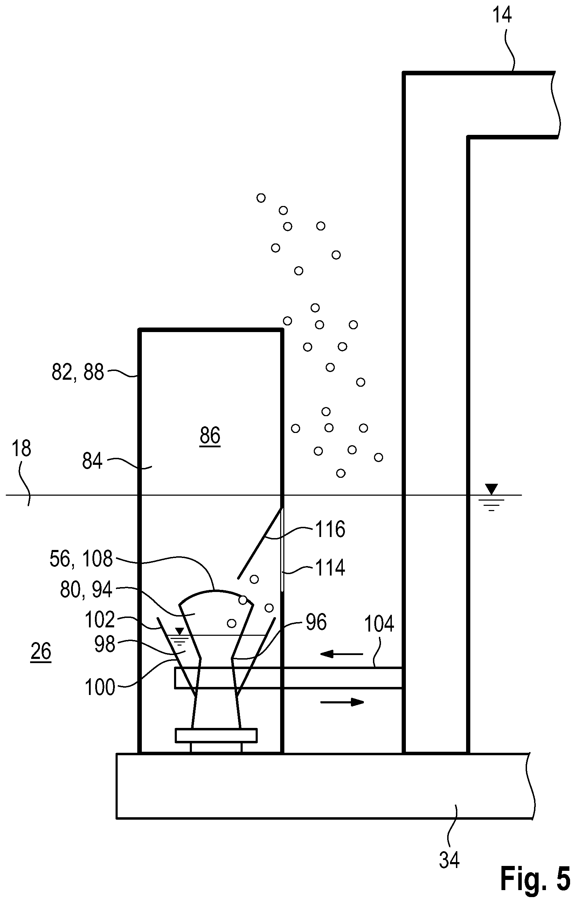

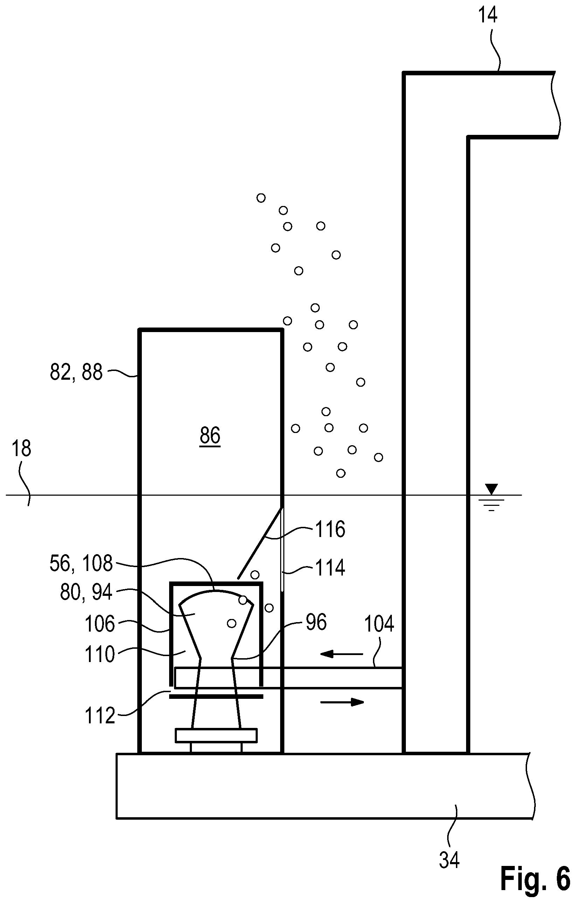

Eine zweite Hauptmaßnahme zur Vermeidung explosiver Gasgemische im Ventingsystem 2, die alternativ oder zusätzlich zu der oben beschriebenen ersten Hauptmaßnahme verwirklicht sein kann, ist im Überblick in FIG. 1 und im Detail in FIG. 5 und 6 dargestellt.

Bei dieser Variante wird ein Teilstrom des Ventstroms 10 durch eine separate Austrittsdüse 80 geleitet, die zwar im Pool 26 des Naschwäschers 12 angeordnet ist, aber nicht direkt in die Waschflüssigkeit 18 eintaucht, sondern von ihr durch Trennwände 82 abgetrennt ist. Im gezeigten Beispiel umschießen die Trennwände 82 eine beispielsweise zylindrische oder quaderförmige Düsenkammer 84 oder Austrittskammer, welche die separate Austrittsdüse 80 umgibt. Die Trennwände 82 bilden insgesamt eine Umfassungswand 88 der Düsenkammer 84. Die Düsenkammer 84 ist hier im Beispiel nach oben hin zum Gasraum 48 offen, ansonsten jedoch allseitig verschlossen. Da die Düsenkammer 84 nach oben aus der Waschflüssigkeit 18 herausragt, kann keine Waschflüssigkeit 18 aus dem Pool 26 in sie hineinströmen. Vielmehr besteht um die separate Austrittsdüse 80 herum zumindest im Standby des Ventingsystems 2 und vorzugsweise auch während des Anfahrbetriebs ein mit Gas gefüllter Gasraum 86, der mit dem Gasraum 48 oberhalb der Waschflüssigkeit 18 strömungsmäßig kommuniziert. Bei hinreichender Höhe des nach oben aus der Waschflüssigkeit 18 im Pool 26 herausragenden Teils der Düsenkammer 84 ist selbige auch während des Ventings vor hineinlaufendem Spritzwasser (Waschflüssigkeit) geschützt, das möglicherweise durch die anderen Austrittsdüsen 38 im Pool 26 ausgeworfen wird.

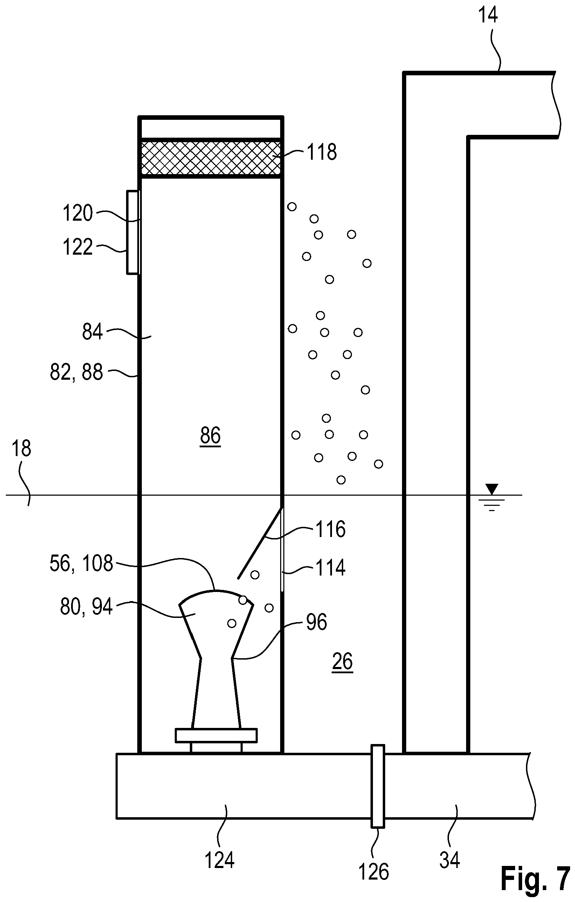

Die separate Austrittsdüse 80 ist hier im Ausführungsbeispiel in Bezug auf den Ventstrom 10 in strömungsmäßiger Parallelschaltung zu den anderen Austrittsdüsen 38 an eine von der Eintrittsleitung 14 abzweigende Zweigleitung 90 angeschlossen (vgl. FIG. 1). Die Verzweigung 92 kann auch an anderer Stelle, etwa innerhalb des Behälters 22, angeordnet sein, vorteilhafterweise jedoch oberhalb des Flüssigkeitsspiegels 32. Es ist auch denkbar, die separate Austrittsdüse 80 an den Verteiler 34 anzuschließen. In diesem Fall sollte jedoch vorteilhafterweise durch geeignete strömungstechnische Maßnahmen dafür gesorgt werden, dass zumindest im Standby des Ventingsystems 2 über die anderen Austrittsdüsen 38 im Pool 26 keine (Rück-) Strömung von Waschflüssigkeit 18 in die Düsenkammer 84 erfolgt (siehe hierzu auch die Beschreibung zu FIG. 7).

In der Düsenkammer 84 ist die separate Austrittsdüse 80 durch den sie umschließenden Gasraum 86 und die Trennwände 82 wärmetechnisch von der Waschflüssigkeit 18 im Pool 26 isoliert. Dadurch wird auch bei dieser Variante die zur Kondensation von Wasserdampf im Ventstrom 10 führende plötzliche Abkühlung vermieden oder jedenfalls verringert, so dass überkritische Konzentrationen zündfähiger Wasserstoffgemische in den nachgeschalteten Systemabschnitten während des Anfahrbetriebes des Ventingsystems 2 vermieden werden.

In einer nicht eigens dargestellten einfachen Version ist innerhalb der Düsenkammer 84 eine trocken und frei in den Gasraum 86 ausblasende Austrittsdüse oder Austrittsöffnung angeordnet, der analog zu der Variante gemäß FIG. 2 bis 4 ein Trockenfilter in der Zweigleitung 90 vorgeschaltet sein kann. Alternativ oder zusätzlich kann ein Trockenfilter weiter stromabwärts in der Düsenkammer 84 angeordnet sein, insbesondere am oberen Ende der Düsenkammer 84 am Übergang zwischen Gasraum 86 und Gasraum 48. In dieser einfachen Version ist gewissermaßen lediglich die in FIG. 1 gezeigte Austrittsöffnung 56 mitsamt zugehörigem Trockenfilter 60 von der erhöhten Position oberhalb des Flüssigkeitsspiegels 32 in eine abgesenkte Position unterhalb des Flüssigkeitsspiegels 32, jedoch durch die Trennwände 82 von der Waschflüssigkeit 18 abgeschottet, verlagert. Die im Zusammenhang mit FIG. 3 und 4 für die die dortige Variante beschriebenen Konzepte für ein in der Zweigleitung 54 angeordnetes Absperrventil 62 sowie zugehörige Betätigungsvorrichtungen sind sinngemäß auf die Zweigleitung 90 übertragbar. Ebenso lassen sich die dortigen Überlegungen zur Auslegung und Dimensionierung des Trockenfilters 60 übertragen.

In einer bevorzugten Version handelt es sich bei der separaten Austrittsdüse 80 um eine analog zu den Austrittsdüsen 38 im Pool 26 gestaltete Venturidüse 94, die an der Kehle 96 mit einer Waschflüssigkeit 98 aus einem eigens zugeordneten Reservoir 100 versorgt wird. Dadurch wird ein Trockenlaufen der Venturidüse 94 verhindert und die Rückhalteeffizienz in Bezug auf im zugeordneten Teilstrom des Ventstroms 10 enthaltenen Radionuklide verbessert. In diesem Fall kann ggf. auf zugehörige Trockenfilter verzichtet werden.

Beispielsweise kann als (Waschflüssigkeits-) Reservoir 100 für die separate Venturidüse 94 in der Düsenkammer 84 eine die Kehle 96 der Venturidüse 94 umschließende, vorteilhaftweise nach oben hin offene Ringkammer 102 dienen, die eine vergleichsweise kleinvolumige, zum Betrieb in der Anfahrphase aber ausreichende Menge an Waschflüssigkeit 98 bevorratet. Dies ist in FIG. 5 dargestellt.

Das kleine Volumen des separierten Reservoirs (vorzugsweise 20 bis 100 I, maximal möglichst nicht mehr als 300 I) wärmt sich zum Beginn des Ventings deutlicher schneller auf als das wesentlich größere Volumen (typischerweise im Bereich 7 bis 21 m³, siehe auch die Bemerkung weiter oben) im Pool 26, so dass die oben beschriebenen Effekte hinsichtlich einer Abkühlung und Kondensation für den durch die separate Venturidüse 94 tretenden Teils des Ventstroms 10 auf ein unbeachtliches Maß abgesenkt sind (Volumenverhältnis des separierten Waschflüssigkeits-Volumens zum Gesamtvolumen vorzugsweise im Bereich 1:50 bis 1:500).

Durch eine vorteilhafterweise vorhandene Beheizung des separaten kleinen Vorrates an Waschflüssigkeit 98 im Reservoir 100 wird das genannte Problem noch weiter entschärft. Hier bietet sich eine passive Beheizung im Ventbetrieb an, etwa durch geeignete Wärmeübertrager, die im heißen Ventstrom 10 enthaltene oder sonstige im Kernkraftwerk verfügbare Überschusswärme auf das der separaten Venturidüse 94 zugeordnete Reservoir 100 übertragen. Diese ist in FIG. 5 beispielhaft durch Wärmeleitrohre 104 angedeutet, die thermisch an die Ringkammer 102 als Wärmesenke und an die zum Verteiler 34 führende Eintrittsleitung 14 für den (Haupt-) Ventstrom 10 als Wärmequelle angekoppelt sind. Die Strömungsrichtung eines in den Wärmeleitrohren 104 zirkulierenden Wärmeübertragungsmediums ist durch Pfeile angedeutet.

Alternativ kann eine Bespeisung der Kehle 96 der separaten Venturidüse 94 mit Waschflüssigkeit 98 über einen Zuleitung aus einem außerhalb der Düsenkammer 84 angeordneten Reservoir erfolgen. Dabei kommt sogar eine Entnahme der Waschflüssigkeit 18 aus dem Pool 26 in Betracht, die sich passiv aufgrund der vorherrschenden (geodätischen) Druckdifferenz bewerkstelligen lässt. Die so aus dem Pool 26 entnommene Waschflüssigkeit 18 ist zwar relativ kalt, heizt sich in der Düsenkammer 84 aber relativ schnell auf, insbesondere wenn durch eine in FIG. 6 angedeutete Kapselung 106 der Venturidüse 94 eine weitgehende Rezirkulation der die Venturidüse 94 durchströmenden Waschflüssigkeit innerhalb eines kleinen Volumens erzwungen wird. Die Kapselung 106 ist vorzugsweise derart beschaffen, dass sie den oberen Teil der Venturidüse 94 inklusive der Kehle 96 und der Austrittsöffnung 108 unter Ausbildung kleinvolumiger Zwischenräume 110 weitgehend umschließt und nur einen relativ kleinen Durchtritt 112 zum restlichen Raum der Düsenkammer 84 aufweist. In einer möglichen Variante kann auch die Umfassungswand 88 der Düsenkammer 84 selber die Kapselung 106 bilden.

Ähnlich wie im vorigen Beispiel kann in einer vorteilhaften Ausgestaltung eine passive Beheizung der von der Kapselung 106 umschlossenen Zwischenräume 110 und somit der darin zirkulierenden Waschflüssigkeit durch Wärmeübertragung vom heißen Abschnitt der Ventleitung 28 erfolgen. Dies ist in FIG. 6 wieder durch entsprechende Wärmeleitrohre 104 als Beispiele für Wärmeübertrager angedeutet.

Eine weitere Alternative ist, dass die separate Venturidüse 94 während des Standby trocken ist und dann gewissermaßen selber während des einsetzenden Ventings aufgrund der sich einstellenden Druckgradienten die zum Betrieb erforderliche Menge an Waschflüssigkeit aus einem zugeordneten Reservoir ansaugt, wobei das Reservoir sogar tiefer und außerhalb des Nasswäschers 12 liegen kann. Der Mechanismus ist ausführlich in der früheren Offenlegungsschrift DE 10 2013 205 525 A1 der AREVA GmbH beschrieben, deren Inhalt an dieser Stelle ausdrücklich in den vorliegenden Text mit einbezogen und zum Bestandteil der Offenbarung erklärt wird. Solch ein passiver Nachfüllmechanismus kann auch für den gesamten Pool 26 zum Einsatz kommen.

Ähnlich wie im Zusammenhang mit der Variante gemäß FIG. 3 und 4 beschrieben, kann ein Betrieb der separaten Venturidüse 94 nur während des Anfahrbetriebs des Ventingsystems 2 vorgesehen sein, solange der Pool 26 des Nasswäschers 12 noch nicht hinreichend aufgewärmt ist, um eine signifikante Wasserdampfkondensation zu verhindern. Danach kann die zur Venturidüse 94 führende Zweigleitung 90 durch ein Absperrventil verschlossen werden, vorteilhafterweise durch ein passives Betätigungsmittel, wie im Zusammenhang mit FIG. 3 und 4 beschrieben.

Es ist aber auch ein dauerhafter Betrieb der separaten Venturidüse 94 möglich. In diesem Fall ist es besonders vorteilhaft, wenn nach der Anfahrphase und dementsprechender Erwärmung der Waschflüssigkeit 18 im Pool 26 die stoffliche und im Wesentlichen auf unterschiedlichen Betriebstemperaturen beruhende konzeptionelle Trennung zwischen der separaten Venturidüse 94 und den restlichen Venturidüsen 40 (oder allgemeiner: Austrittsdüsen 38) im Pool 26 aufgehoben wird. Hierzu kann beispielsweise in den Trennwänden 82, welchen die Düsenkammer 84 vom Rest des Pools 26 abtrennen, eine Anzahl von Überströmöffnungen 114 (Querschnittsfläche jeweils vorzugsweise im Bereich von 10 bis 30 cm², um Verstopfung zu vermeiden) vorhanden sein, die anfänglich durch geeignete Verschlussklappen 116, Schiebetüren oder dergleichen verschlossen sind und nach besagtem Zeitraum geöffnet werden. Dies bewirkt, dass die zuvor separate Venturidüse 94 dann wie die anderen Venturidüsen 40 auch zumindest im Bereich der Kehle 96 und den dort befindlichen Ansaugöffnungen von der Waschflüssigkeit 18 im Pool 26 umströmt wird. Derartige Überströmöffnungen 114 und Verschlussklappen 116 sind in FIG. 5 und 6 schematisch angedeutet.

Die Auslösung und Betätigung der Verschlussklappen 116 erfolgt bevorzugt passiv. Rein beispielhaft können die Verschlussklappen 116 mit einem federbelasteten Öffnungsmechanismus gekoppelt sein, der im Anfangszustand durch ein im Pool 26 angeordnetes oder zumindest thermisch angekoppeltes Schmelzlot blockiert ist. Sobald die Temperatur der Waschflüssigkeit 18 im Pool 26 eine vorgegeben Auslösetemperatur überschreit, schmilzt das Schmelzlot und gibt den Öffnungsmechanismus frei. Anstelle von Federantrieb und Schmelzlot sind selbstverständlich wieder mannigfache andere Auslöse- und Antriebsmittel möglich, von denen hier nur exemplarisch Formgedächtnismaterialien, Bimetalle und unter Druck stehende Fluide genannt werden sollen.

FIG. 7 zeigt eine beispielhafte Ausgestaltung, bei der viele der bislang beschriebenen Konzepte in vorteilhaft zusammenwirkender Weise verwirklicht sind. Eine frei ausblasende separate Venturidüse 94 ist in einer Düsenkammer 84 angeordnet, an deren oberen, oberhalb des Flüssigkeitsspiegels 32 liegende Ende ein Trockenfilter 118 in den Strömungsweg eingesetzt ist. Die Umfassungswand 88 der Düsenkammer 84 weist eine Anzahl von mit Verschlussklappen 116 versehenen Überströmöffnungen 114 unterhalb des Flüssigkeitsspiegels 32 auf, die beispielsweise mit Hilfe einer Schmelzlotsicherung im Verschlusszustand blockiert sind und bei Überschreiten einer vorgegebenen Auslösetemperatur geöffnet werden. Oberhalb des Flüssigkeitsspiegels 32 befindend sich ein oder mehrere weitere Überströmöffnungen 120, die jeweils durch eine Berstscheibe 122 verschlossen sind. Die Bestscheibe 122 öffnet bei einer vorgegebenen Druckdifferenz von beispielsweise 500 mbar, etwa wenn der Trockenfilter 118 verstopft ist, oder wenn der Druck des (Teil-) Ventstroms in der Düsenkammer 84 eine für die Beendigung des Anfahrvorganges charakteristischen Wert übersteigt.

Der der Venturidüse 94 zugeleitete Teilstrom des Ventstroms 10 wird in diesem Beispiel direkt von dem unterhalb des Flüssigkeitsspiegels 32 liegenden Verteiler 34 abgezweigt, der auch die anderen Venturidüsen 40 versorgt. Eine in die kurze Zweigleitung oder Zuleitung 124 eingesetzte Berstscheibe 126 mit einer Auslösedruckdifferenz von beispielsweise 100 mbar verhindert im Standby ein Überströmen von Waschflüssigkeit 18 aus dem Pool 26 über die Ansaugöffnungen der im Pool 26 angeordneten Venturidüsen 40 in die Düsenkammer 84. Bei einsetzendem Venting reißt der Betriebsdruck des Ventstroms 10 die Berstscheibe 126 auf und verhindert vorerst ebenfalls ein signifikantes Überströmen von Waschflüssigkeit 18. Später wird durch die sich öffnenden Verschlussklappen 116 das Überströmen von Waschflüssigkeit 18 aus dem Pool 26 in die Düsenkammer 84 ermöglicht. Ein späteres Schließen der Zuleitung 124 ist daher in diesem Fall nicht notwendig. Ein derartiger Anschluss der separaten Venturidüse 94 an den Verteiler 34 kommt auch in den anderen beschriebenen Varianten mit separierten Venturidüsen in Betracht. Alternativ ist die zugehörige Leitungsverzweigung vorteilhafterweise geodätisch oberhalb des Waschflüssigkeitsspiegels 32 anzuordnen, um das angesprochene Rückflussproblem zu vermeiden.

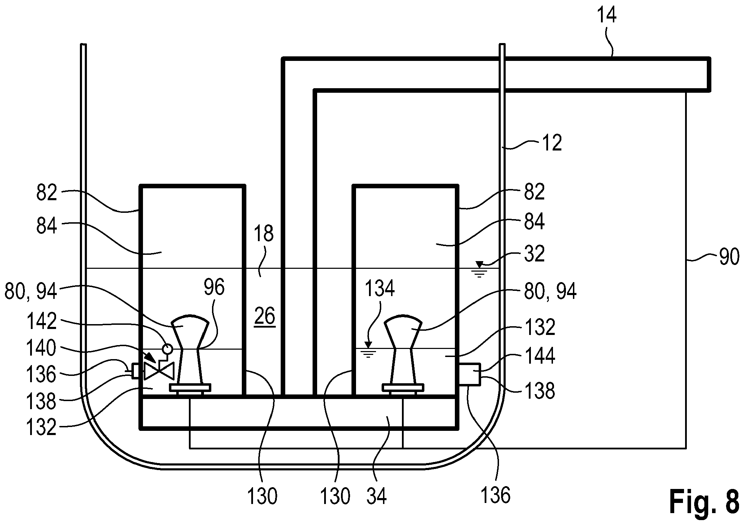

In FIG. 8 sind zwei weitere Möglichkeiten dargestellt, um das Auftreten von brennbaren Gasgemischen im Ventingsystem 2 zu verhindern.

Links in der Figur ist eine Venturidüse 94 als ein bevorzugtes Beispiel für eine Austrittsdüse 80 dargestellt, die analog zu den Venturidüsen 80 in FIG. 5 bis 7 durch eine sie umgebende Düsenkammer 84 mit Trennwänden 82 von der Waschflüssigkeit 18 im Pool 26 separiert ist und durch eine beispielsweise oberhalb des Flüssigkeitsspiegels 32 von der Eintrittsleitung 14 abzweigende Zweigleitung 90 mit einem Teilstrom des Ventstroms 10 bespeist wird. Alternativ erfolgt die Zuführung des Ventstroms 10 über eine unterhalb des Flüssigkeitsspiegels 32, etwa am Verteiler 34 abzweigende und anfänglich durch eine Berstscheibe verschlossene Zweigleitung analog zu der Variante in FIG. 7. Weitere konventionelle Venturidüsen 40, die an den Verteiler 34 angeschlossen sind und unmittelbar in die Waschflüssigkeit 18 im Pool 36 eintauchen, sind hier der Übersichtlichkeit halber nicht dargestellt.

Die Düsenkammer 84 der linken Venturidüse 94 umschließt ein Volumen, welches in einem unteren Bereich ein im Vergleich zum Pool 26 wesentlich kleineres Reservoir 130 für Waschflüssigkeit 132 ausbildet. Das Reservoir 130 kann während des Bereitschaftszustandes trocken sein oder in einer bevorzugten Alternative bis zu einer Füllstandstandhöhe 134, die vorteilhafterweise nur knapp über der Kehle 96 und den dort angeordneten Ansaugöffnungen der Venturidüse 94 liegt, mit einer Waschflüssigkeit 132 befüllt. Die Venturidüse 94 taucht mit ihrer Ansaugöffnung für Waschflüssigkeit 132 also in das Reservoir 130 und in die darin vorhandene Waschflüssigkeit 132 ein, welche durch die Trennwände 82 strömungsmäßig und in einem gewissen Maß auch thermisch von der Waschflüssigkeit 18 im Pool 26 separiert ist.

Beim Beginn des Ventings wird anfänglich nur die im Reservoir 130 vorhandene Waschflüssigkeit 132 durch die Venturidüse 94 angesaugt und rezirkuliert, wobei sie sich sehr schnell so weit erwärmt, dass eine Kondensation von im (Teil-) Ventstrom 10 vorhandenen Wasserdampf vermieden ist.

Zu einem etwas späteren Zeitpunkt, an dem durch einsetzende Verdampfung der Füllstand von Waschflüssigkeit 132 im Reservoir 130 unterhalb die Ansaugöffnung der Venturidüse 94 abzusinken droht, ist eine passive Nachspeisung von Waschflüssigkeit 18 aus dem umliegenden Pool 26 vorgesehen. Zu diesem Zweck ist eine durch die Trennwand 82 geführte Überströmleitung 136 zwischen dem Pool 26 und dem internen Reservoir 130 vorhanden, die anfänglich verschlossen ist. Der Verschluss 138 weist vorteilhafterweise temperaturabhängige passive Öffnungsmittel auf, die die Überströmleitung 136 freigeben, sobald die Temperatur der Waschflüssigkeit 132 im Reservoir 130 einen vorgegebenen, für die Unterbindung von Wasserdampfkondensation charakteristischen Wert überschreitet.

Da zum Zeitpunkt der Öffnung des Verschlusses 138 in der Überströmleitung 136 die Waschflüssigkeit 18 im Pool 26 in der Regel noch eine deutlich geringere Temperatur besitzt als die Waschflüssigkeit 132 im Reservoir 130, wird die Nachspeiserate vorteilhafterweise auf ein für den Nassbetrieb der Venturidüse 94 erforderliches Maß begrenzt. Damit wird das Volumen der Waschflüssigkeit 132 im Reservoir 130 so klein wie möglich gehalten, und die pro Zeiteinheit nachgespeiste, relativ kleine Menge wird schnell wieder aufgeheizt, so dass die Waschflüssigkeit 132 im Reservoir 130 die zur Vermeidung von Dampfkondensation gewünschte Temperatur aufrechterhält. Wie Überschlagsrechnungen gezeigt haben, lassen sich bei einem die separierte Venturidüse 94 durchströmenden (Teil-) Ventstrom von 1 kg/s etwa 20 bis 200 kg Waschflüssigkeit im zugeordneten Reservoir 130 hinreichend schnell erwärmen. Dieser Wert kann der Dimensionierung des jeweiligen Reservoirs zugrunde gelegt werden.

Für die rechts in der Figur angeordnete Venturidüse 94 gilt die bisherige Beschreibung analog.

Bei der linken Venturidüse 94 in FIG. 8 wird das Überströmen der Waschflüssigkeit 18 vom Pool 26 in das Reservoir 130 durch ein schwimmergesteuertes Ventil oder kurz Schwimmerventil 140 bedarfsgerecht geregelt. Der Schwimmer 142 öffnet das in die Überströmleitung 136 geschaltete Ventil immer dann, wenn ein vorgegebener Mindestfüllstand im Reservoir 130 unterschritten wird und schließt andernfalls wieder. Bei der rechten Venturidüse 94 ist alternativ eine Drossel 144, etwa in Form einer Drosselscheibe, in die Überströmleitung 136 geschaltet, die eine permanente, kontinuierliche Drosselung der Überströmung vornimmt und somit die Nachspeiserate limitiert.

Zu einem noch späteren Zeitpunkt kann dann, ähnlich wie im Zusammenhang mit FIG. 5 bis 7 beschrieben, die Separation der Venturidüse 94 vom umgebenden Pool 26 durch Freigabe entsprechender, vorzugsweise permanenter und ungedrosselter Überströmöffnungen aufgehoben werden.

Wie bereits erwähnt, sind die beschriebenen Maßnahmen in vielfältiger Weise miteinander kombinierbar. Allen Varianten gemeinsam ist, dass der Hauptteil des Ventstroms 10 durch eine Anzahl von zumindest teilweise in die Waschflüssigkeit 18 im Pool 26 eingetauchten Austrittsöffnungen oder -düsen 38 (insbesondere Venturidüsen 40) geleitet wird, während ein Teilstrom diese Austrittsöffnungen oder -düsen 38 umgeht und konsequent von einer Wasserdampfkondensation bewirkenden Wärmesenke ferngehalten. Dieser Teilstrom wird entweder direkt in den Gasraum 48 des Waschbehälters 12 eingeleitet, und zwar vorzugsweise durch Trockenfilter 60 oder 118 gefiltert, oder über eine Anzahl von separaten Austrittsöffnungen oder -düsen 80 (insbesondere Venturidüsen 94). Diese separaten Austrittsöffnungen 56 oder -düsen 80 sind durch stoffliche und/oder thermische Barrieren zumindest thermisch und vorzugsweise auch strömungsmäßig von der Hauptmenge der Waschflüssigkeit 18 im Pool 26 isoliert, zumindest während des Bereitschafszustandes des Ventingsystems 2 und vorzugsweise auch im Anfahrbetrieb des Ventvorganges, vorzugsweise aber nicht mehr während des späteren, voll in Gang gekommenen Ventings. Der wesentliche Maßstab für den Zeitpunkt der Umstellung ist dabei die Temperatur der Waschflüssigkeit 18 im Pool 26.

Dabei liegt das z. B. durch geeignete Ausgestaltung der Strömungsquerschnitte zu erzielende Verhältnis der Volumenströme von Teilstrom zu Gesamtstrom während des Anfahrbetriebs vorzugsweise im Bereich von 10 bis 30 %, kann bei ungünstigen Gaszusammensetzungen im Containment und/oder bei niedrigem Containment-Druck zu Beginn des Ventings aber auch durchaus 50 bis 75 % betragen. Dabei wird der Teilstrom vorteilhafterweise anhand der (zu erwartenden bzw. prognostizierten) initialen, zu Beginn des Ventings vorliegenden Gaszusammensetzung im Containment festgelegt, und zwar mit der Zielsetzung, die Konzentration von Wasserstoff im gesamten Ventingsystem unter etwa 4 Vol.% und von Sauerstoff unter etwa 5 Vol.% zu halten, bzw. den Inertgas-Anteil größer als etwa 50 bis 55 Vol.% zu halten.

Die vorliegende Erfindung beinhaltet auch den Extremfall, dass der gesamte Ventstrom 10 durch die separierte(n) Austrittsdüsen 80 geleitet wird, also gar keine direkt in den Pool 26 eingetauchten Austrittsdüsen 38 vorhanden sind. Dies ist insbesondere für die in Verbindung mit FIG. 8 beschriebenen Varianten von Interesse.

Nach Beendigung des Anfahrbetriebes folgt üblicherweise der Übergang in ein quasistationäres Betriebsverhalten, in dem wesentliche Betriebsparameter wie Druck, Temperatur und Strömungsgeschwindigkeit des Ventstroms über Zeiträume von Stunden sich nur noch geringfügig ändern. Dies wird insbesondere dann passieren, wenn der Pool so weit aufgeheizt ist, dass sich ein Gleichgewichtszustand einstellt, nämlich wenn die Temperatur im Pool konstant ist und sich eine aus der Überhitzung / Nachzerfallsleistung resultierende konstante Verdampfungsrate einstellt, die die Inertisierung unterstützt oder zumindest aufrecht erhält (quasi-stationär, da der Druck im Containment langsam sinken wird).

In der vorstehenden Beschreibung war verschiedentlich die Rede von einer Einbaulage unterhalb oder oberhalb des Flüssigkeitsspiegels 32 der Waschflüssigkeit 18 im Pool 26 des Waschbehälters 12. Dabei ist zu berücksichtigen, dass sich die während des Bereitschaftszustandes vorgegebene Füllstandshöhe 24 während des späteren Ventings in gewissen Grenzen ändern kann, und es sind entsprechende Schwankungsbereiche einzukalkulieren, die zumindest den Anfahrbetrieb des Ventvorganges abdecken.

Der Nasswäscher 12 ist wie beschrieben beispielsweise innerhalb des Containments 8 angeordnet, kann sich alternativ aber auch außerhalb des Containments 8 befinden. Die zuletzt genannte Variante ist sogar von besonderem Interesse, da dort die Temperatur der Waschflüssigkeitsvorlage im Pool des Wäschers sich in der Regel nur auf Umgebungstemperatur befindet und nicht durch einen im Containment bei schweren Störfällen zu verzeichnenden Temperaturanstieg vorgewärmt wird.

Das Ventingsystem 2 wurde hier im Zusammenhang mit einem Kernkraftwerk 4 beschrieben, kann aber auch in anderen nuklearen oder nicht-nuklearen Anlagen verwendet werden, bei denen es auf einen gefilterten Druckabbau in einem Containment oder in einem ähnlichen umschlossenen Volumen ankommt.

Die erfindungsgemäßen Prozessprinzipien und Komponentenausführungen gelten sowohl für neu zu fertigende Systeme als auch für Nachrüstungen von bereits bestehenden Systemen. Die Nachrüstung kann sowohl intern in bestehenden Behältern als auch durch Ergänzung von neu angeschlossenen Behältern / Komponenten realisiert werden.

Wie bereits erwähnt, können im Rahmen der vorliegenden Erfindung anstelle der Venturidüsen auch andere Arten von Austrittsöffnungen und damit verwirklichte Poolscrubbing-Technologien prinzipiell verwendet werden, wie z. B. andere Ringdüsenanwendungen, abgetauchte Filterkartuschen, statische Mischelemente oder Kombinationen aus diesen Wäschereinbauten.

Zusammengefasst baut die vorliegende Erfindung auf folgenden, bisweilen beispielhaft konkretisierten Grundlagen auf, die in dem Systemüberblick gemäß FIG. 1 repräsentiert sind:
Das Gasgemisch welches im Containment vorliegt, wird durch eine Eintrittsleitung dem Nasswäscher zugeführt und in die Venturi-Sektion geleitet. Die Venturidüsen werden bevorzugt mit hohen Strömungsgeschwindigkeiten von > 200 m/s (bezogen auf den Waschflüssigkeitsansaugbereich an der Kehle), vorzugsweise in Kombination mit einer weiteren, nachfolgenden kritischen Drosselung, betrieben.

Vorzugsweise werden Lang- oder auch Flachventuris, in einem Kehlflächenbereich von > 2 cm² bis 20 cm² verwendet, um eine Minimierung der Anzahl zu gewährleisten und bei gleichzeitig optimierten geringen Abmessungen von < 3 cm Dicke, zur Sicherstellung kurzer Waschflüssigkeits-Einspeisewege, und Waschflüssigkeits-Ansaugeschlitzen/-flächen von < 50 % der Kehlflächen, in einem Winkel von 30 bis 90° zur Venturiachse, ein optimales Abscheideverhalten zu erreichen. In bestimmten Fällen kann auch eine unterhalb des Wasserspiegels angeordnete, eventuell auch nach unten ausblasende Kurzventuri-Version vorteilhaft sein.

Die Aerosolabscheidung erfolgt durch den Kontakt mit feinsten Wassertröpfchen, welche durch passives Ansaugen an der Venturikehle durch den hohen Geschwindigkeitsunterschied zwischen Gasstrom und Waschflüssigkeit entstehen. Aerosole, welche die Wassertröpfchen berühren, werden dann mit den Tröpfchen abgeschieden. Zur Abscheidung von gasförmigem Iod aus dem Abgas ist die Waschflüssigkeit vorteilhafterweise mit Natronlauge und Natriumthiosulfat konditioniert. Die hohe Reaktionsoberfläche im Bereich der Venturikehle ist maßgeblich dafür verantwortlich, dass gasförmiges Iod chemisch gebunden werden kann und in der Waschflüssigkeit gelöst bleibt.

Die Abscheidung der Waschflüssigkeitströpfchen aus dem gereinigten Gasstrom erfolgt nun bevorzugt in Stufen. Mittels Prallabscheidung wird bereits am Venturiaustritt ein Teil der beladenen Waschflüssigkeit abgeschieden. Zur weiteren Minimierung des Wasserbedarfs in der Anfahrphase kann eine Abscheidung der Venturiflüssigkeit am Austrittsrohr durch Prallabscheider und gezielte Rückleitung in den Ansaugbereich erfolgen. Gleichzeitig werden nun bevorzugt sehr hohe Leerrohrgeschwindigkeiten, von z. B. > 1 bis 3 m/s, eingestellt und gezielter Tropfenmitriss, der zu einer weiteren Schadstoffabscheidung (durch Bildung von Reaktionsoberflächen) führt, eingestellt.

In einer nachfolgenden, hocheffektiven Fliehkraftabscheiderstufe, die vorzugsweise aus einen einem Hochgeschwindigkeits-Lammellenabscheider mit Hoch- und Niedriggeschwindigkeitsbereich, mit > 5 Lammellenreihen, vorzugsweise > 10, besteht, wird nun quantitativ die Waschflüssigkeit vom Gasstrom getrennt und in den Pool zurückgeleitet. Eine Ausführung des Fliehkraftabscheiders als Zyklonabscheider ist gleichfalls möglich.

In einer weiteren Demisterstufe, in FIG. 1 schematisch durch den Metall-Faser-Filter 50 repräsentiert, die vorzugsweise mit Metallfasern von > 60 µm gestaffelt bis > 8 µm, belegt ist, kann noch eine weitere Agglomeration der verbliebenen Feintröpfchen sowie ebenfalls eine teilweise Nachabscheidung von Feinaerosolen, erfolgen. Zusätzlich können auch weitere Fasermatten mit feinerer Belegung oder Sinter-Porenfilter bzw. Metallvlieskartuschen nachgeschaltet sein.

Diese Kombination mit den, mittels nachfolgender, kritischer Drosselung eingestellten, permanent hohen Venturi-Strömungsgeschwindigkeiten und der hohen Leerohrgeschwindigkeit sowie der Fliehkraft- und Demisterabscheidung ermöglicht nun bereits eine weitergehende Abscheidung von Aerosolen von > 1 µm mit > 99,9 wt. % sowie gleichzeitig auch für die penetrierenden Feinaerosole von < 1 µm, noch immer > 99 wt. %, sowie parallel eine lodabscheidung > 99 wt. %. Hierzu wird zusätzlich durch Eintropfung oder Direkteinspeisung von Chemikalien, wie Natronlauge, und/oder Natriumthiosulfat, eine effektive lodsorption erreicht. Die Zuschaltung dieser Chemikalieneinspeisung/-dosierung kann über Differenzdruckauslösung, oder über ein Thermolotventil, erfolgen. Mit der Erweiterung auf einen Metallfaserfilter mit Faserdurchmessern bis zu 2 µm werden Aerosolabscheidegrade von bis zu 99.99% selbst für relevante Feinaerosole im Bereich des Filterspalts erreicht.

In einer weiteren Abscheidestufe, in FIG. 1 schematisch durch den Molekularsieb-Filter 52 repräsentiert, werden dann gasförmige Iod Spezies inklusive von sogenanntem organischem Iod (z. B. Methyliodid) abgeschieden. Der lodfilter besteht beispielsweise aus einem Schüttbett, welches ein Sorbens (Molekular Sieb Sorbens) enthält, welches durch Adsorption und Chemisorption gasförmige Iod Spezies aufnimmt und zurückhält.

Nachfolgend wird der aufgereingte Gasstrom in die Austrittsleitung geführt und von dort in den zugeordneten Abgabekamin geleitet.

Die beschriebenen drei Abscheider- bzw. Rückhaltestufen können sowohl in einem integralen Filterbehälter, als auch in modularen Einheiten unterschiedlicher Größe untergebracht werden. Die Modularität kann durch Festlegung kleinerer, aber sämtliche Rückhaltestufen enthaltenden Behältern definiert sein, als auch durch einen Aufbau mit sequentiell angeordneten Behältern. In diesem Fall sind die Rückhaltestufen dann jeweils auf einen Behälter aufgeteilt, wobei hier auch Mischformen denkbar sind. Die beschriebene Erfindung bezieht sich auf alle modularen und integralen Konzepte.

Große Wasserreservoire sind erforderlich, um die Nachzerfallswärme aus den zurückgehaltenen radioaktiven Aerosolen und Iod durch Wasserverdampfung in der Temperatur zu begrenzen und im Ventbetrieb das Abkühlen der heißen Gase auf Sattdampftemperatur zu ermöglichen. Ein Austrocknen der Einrichtung würde die Rückhaltefunktion gefährden und zusätzlich eine Wiederfreisetzung der zurückgehaltenen Aktivitäten verursachen.

Die Oberfläche der (bevorzugt nach außen nicht thermisch isolierten) Venturiwäschereinheit kann hierbei gegebenenfalls als Wärmeübertragungsfläche an die Umgebung benutzt werden, um den Waschflüssigkeitshaushalt gezielt für längere Betriebszeiten nutzbar zu machen. Berücksichtigt man in jedem Fall vorhandene Anbauten, wie Stutzen, Pratzen, Ösen oder bringt ggf. gezielt Rippen oder ähnliche Strukturen zusätzlich an, lassen sich die Wärmeübertragungsleistungen von durchschnittlich 30 bis 70 kW auf bis zu 100 kW verbessern, Dies liegt dann bereits im Bereich mittlerer Nachzerfallsleistungen, die im Venturiwäscher akkumuliert werden und demonstriert die Praxisnähe der Einrichtung.

Weiterhin haben neuere Untersuchungen zum Containmentverhalten gezeigt, dass in bestimmten Situationen deutlich erhöhte Aktivitäten und in der Folge Aerosol- und lodnachwärmen freigesetzt werden können. Der Wasserbedarf in Wäschereinrichtungen ist daher in solchen Situationen signifikant und führt zu entsprechend großvolumigen Einrichtungen. Dies bedeutet, dass die Anfahrzeit - das ist die Zeitspanne, in der der noch kalte Wäscher durch das eintretende Ventgas auf die zugehörige Sattdampftemperatur erhitzt wird - sich deutlich verlängert.

In der Anfahrzeit wird der Wasserdampfgehalt des eintretenden Gemischs durch Kondensation im kalten Pool deutlich reduziert, wodurch aus dem Containment kommende dampfinerte Gemische wieder entflammbar werden können. Grundsätzlich tritt dieser Effekt bei jedem Ventingfilter auf, weshalb einige dieser Systeme im Stand der Technik zum Teil vorgeheizt werden. Im Containment installierte Filter sollen das Problem der Anfahrkondensation vermeiden. Allerdings sind mit den In-Containment Filtern andere Nachteile verbunden (Nachwärmeabfuhr, Filter Clogging, Re-Volatilisierung von aerosolgebundenem als auch gasförmigem Iod etc.), und es sind selbst im Containment erhebliche Temperaturstratifikationen möglich, die eine Kondensation von Dampf nie ganz ausschließen können.

Eine im Rahmen der vorliegenden Erfindung vorgenommene Verbesserung der Venturiwäschereinheit durch Minimierung der Zustände brennbarer Gasgemische, hervorgerufen durch Aufhebung der Dampfkondensation, ist zur Erreichung von höheren Sicherheitsstandards für die entsprechend nachgerüsteten oder neu gebauten Kraftwerke von essentieller Bedeutung. Dies ermöglicht eine Verkürzung der Anfahrphase ohne Dampfinertisierung auf Zeiträume, wie sie bei Out-Containment Trockenfiltern oder auch bei im Containment relativ tief (niedriges Gebäudelevel) aufgestellten Trockensystemen auftreten, durch eine einfache, passive und kostengünstige Variante der Gestaltung des Venturiwäschers.

Zusammengefasst wird bei den Varianten der Erfindung gemäß FIG. 2 bis 4 der zur Aufrechterhaltung der Inertisierung notwendige Teilstrom an Dampf oberhalb des Pools 26 durch einen separat angebrachten Trockenfilter 60 direkt in den Gasraum 48 geleitet.

Der Trockenfilter 60 besteht beispielsweise aus einem Aerosolfilter und einem Filter für gasförmige lod-Spezies. Der Aerosolfilter besteht beispielsweise aus einem Metallfaservlies mit mehreren Lagen, welche im Faserdurchmesser bis zu 2 µm gering sind, um auch feinste Partikel zurückzuhalten. Der lodfilter besteht beispielsweise aus einem Sorbens, welches durch Adsorption (Physisorption und/oder Chemisorption) gasförmiges Iod aufnimmt und zurückhält. Der Aerosolfilter ist in dieser Anordnung zweckmäßigerweise vor dem lodfilter angeordnet. Die Vorrichtung funktioniert alternativ auch nur mit einem Aerosolfilter als Trockenfilter (ohne lodfilterstufe).

Die Auslegung der einzelnen Stufen erfolgt anhand der in der kurzen Betriebszeit zu erwartenden Massen an Aerosol und Iod sowie unter Berücksichtigung der zulässigen Anströmgeschwindigkeiten bzw. Verweilzeiten.

Wie erwähnt, wird der Trockenfilter 60 vorteilhafterweise nur für die relativ kurze Zeitspanne betrieben, bis der Wäscherpool die Aufheizphase beendet hat und keine Kondensation mehr zu einer Aufhebung der Dampfinertisierung führt. Diese kurze Zeitspanne beträgt in der Regel 20 bis 30 Minuten.

Danach wird vorteilhafterweise die Zuführungsleitung geschlossen, was durch aktive Maßnahmen als auch passive Vorkehrungen geschehen kann (siehe FIG. 3 und 4). Die aktiven Maßnahmen beinhalten dabei unter anderem das Schließen eines Ventils in der Zuführungsleitung mit Handantrieb, Hand-Fernantrieb oder Pneumatik-, Hydraulik oder Motor-gesteuertem Ventil. Die passiven Maßnahmen beinhalten dabei unter anderen temperaturgesteuerte Maßnahmen mittels Schmelzsicherung oder Wärmetauscher (z. B. passiver Impulsgeber), welche zum Schließen eines Ventils führen, hier im Beispiel des Absperrventils 62.

Die Abfuhr der Wärme, welche die im Trockenfilter 60 angelagerten Aerosole bzw. Iod erzeugen, erfolgt in der Anfangsphase durch den hindurch geleiteten Teildampfstrom, später durch den Dampfstrom aus dem Pool 26 und die darin enthaltenen Wassertröpfchen.

Zusammenfassend lassen sich die in FIG. 5 und 6 gezeigten, auf der Venturidüsen-Technologie beruhenden Varianten mit anderen Worten wie folgt beschreiben:
Die im Rahmen der Erfindung eingesetzte Venturidüsen-Sektion besteht aus zwei funktionellen Abschnitten, verwirklicht durch Unterteilung des Venturipools in einen ersten herkömmlichen Teil, bestehend aus Venturidüsen 40, die entweder freiblasend oder abgetaucht, jedoch im Ansaugbereich (an der Kehle 96) vollständig von Waschflüssigkeit 18 umgeben sind, und einen zweiten Teil, dadurch gekennzeichnet, das die Venturidüse(n) 94 freistehend in einem Gasraum 86 aufgestellt sind. Die Zufuhr der Waschflüssigkeit zu den Venturidüsen 94 in diesem zweiten, neuen Teil des Venturiwäschers erfolgt gezielt nur an die Kehle 96, wo die Waschflüssigkeit angesaugt wird, und minimiert damit das Quenching und den Wärmeaustrag aus dem Gasstrom der separierten Venturidüse 94.

Im Standby-Betrieb ist der zweite Teil trocken konditioniert und bei Durchsatzbetrieb passiv in kürzesten Zeitabschnitten mit Waschflüssigkeit befüllbar. Weiterhin kann die Waschflüssigkeit für diesen zweiten Teil durch das eintretende, überhitzte Gas vom Containment vorteilhafterweise (passiv) vorgewärmt werden, wodurch die Dampfkondensation beim Anfahren in der Venturidüse 94 weiterhin reduziert wird. Hier sind verschiedene Ausführungen der Wärmeübertrager denkbar, beispielsweise als Rohr- oder auch Plattenwärmeübertrager, bzw. eine integrierte Ausführung des nachfolgend beschriebenen ersten, den Ansaugbereich der Venturidüse(n) 94 umgebenden, separaten Pools.

Die Bespeisung der Kehle 96 der separaten Venturidüse 94 kann entweder durch angeschlossene Rohrleitungen direkt oder aber durch die Ausgestaltung als passiv ansaugende Wäschereinheit erfolgen, die im Ansaugbereich der Venturidüse 94 mit einem separaten Pool ausgestattet ist, der z.B. aus einer kleinvolumigen, umgebenden Wanneneinrichtung oder einer Ringkammer 102 besteht, die vorteilhafterweise an ein weiteres Wasserreservoir angeschlossen ist und von dort überspeist werden kann. Eine weitere Möglichkeit der gezielten Bespeisung kann darin bestehen, den Wasseraufwurf, den die Venturidüsen 40 im restlichen Poolbereich erzeugen, gezielt zur Bespeisung der trocken angeordneten Venturidüse 94 zu nutzen und so die notwendige, geringe Wassermenge für eine schnelle Aufheizung und damit Erhaltung der Dampfinertisierung bereitzustellen.

Vorteilhafterweise wird das ausgeblasene, nun warme bzw. heiße Waschwasser der separierten Venturidüse(n) 94 auch separat rezirkuliert, um sehr effektiv und schnell dampfinerte Zustände zu erreichen bzw. aufrecht zu erhalten. Hier kann eine geeignete Kapselung 106 der Venturidüse 94 die Waschwasserrückführung gezielt und vorteilhaft beeinflussen.

Bei dem beschriebenen Konzept gelingt es, den Flüssigkeitsstand in den Wäschereinrichtungen jeweils aufzufüllen und/oder konstant im gewünschten Bereich zu halten und somit das Überfluten der gesamten Venturidüse(n) zumindest für den Zeitraum der Aufheizung des Hauptpools zu beschränken.

Die beschriebene Zweiteilung des Venturiwäschers kann in einer konstruktiven Ausführung vorteilhafterweise um passive Elemente ergänzt werden, die die Zweiteilung am Ende des Aufheizprozesses unwirksam werden lassen, so dass dann der gesamte Pool 26 uneingeschränkt alle Venturidüsen 40 und 94 direkt und komplett umspült. Eine solche Ausführung mit zu öffnenden oder entfernbaren Trennwänden oder Verschlussklappen 116 kann zum Beispiel mittels Schmelzsicherung im kalten Zustand verschlossen sein. Nach Erreichen einer Auslösetemperatur im Pool im Bereich von vorzugsweise 85 bis 120 °C, vorteilhafterweise etwa 95 °C, öffnet sich die Schmelzlotsicherung und gibt einen Öffnungs- oder Überströmquerschnitt, hier im Beispiel die Überströmöffnung(en) 114 frei, der eine uneingeschränkte Ausbreitung und Zirkulation der Waschflüssigkeit ermöglicht. Die passiven Elemente zum Aufheben der Zweiteilung des Pools können beispielhaft auch mittels Komponenten realisiert werden, welche nach dem Prinzip einer Bimetall- bzw. Formgedächtnislegierung bzw. eines Thermostatventil konzipiert sind.

Durch gezielte Drosselung im Gaseintrittsbereich kann nun passiv ein Treibdruck erzeugt werden, der kombiniert mit einer passiven Füllstandsregelung, Waschflüssigkeit gezielt in die Venturiwäscher-Einrichtung ansaugt. Der nötige Ansaugunterdruck kann selbsttätig, durch gezielte Drosselung und Druckabsenkung im Venturi erzeugt werden. Hierbei wird im Gaseintrittsbereich, z. B. durch Düsen, wie z. B. Venturis, Lochdüsen, etc. ein negativer treibender Differenzdruck von > 0,1 bar, vorzugsweise beim hohem Druck zu Beginn des Ventings von > 1 bar, gegenüber dem speisenden Wasserreservoir, vorzugsweise dem Hauptpool des Venturiwäschers erzeugt. Die Befüllung kann nun direkt beim Anfahren mit maximal treibendem Differenzdruck erfolgen.

Die Einstellung und Regelung des Füllstandes im Nasswäscher 12 wird ggf. über eine Schwimmer-Füllstandssteuerung, vorzugsweise mit einem schmutzunempfindlichem Rollkugelverschluss, oder Drehschieberventil, oder mittels durch passiven Impulsgeber gesteuerter Absperreinheit durchgeführt. Durch Hintereinanderschaltung unterschiedlicher Mechanismen kann eine höhere Zuverlässigkeit zur Befüllung erreicht werden.

Die maximale Nachspeiserate für die Venturidüsen ist durch Drosseleinrichtungen und unter Berücksichtigung des erreichbaren Aufheizgrades vorteilhafterweise so limitiert, dass der Dampfpartialdruck am Austritt der Venturidüsen mindestens 0,33 bar, vorzugsweise jedoch 0,5 bis 1 bar beträgt, so dass dampfinerte Zustände im Gasraum des Venturiwäschers in kürzester Zeit erreichbar sind.

In einer weiteren Kombination wird zur Befüllung ein vorhandenes, nichtintegrales Wasserreservoir, z. B. ebenerdige angeordnete Reservewassertanks, genutzt. Hierbei wird nun die Wasserzufuhr durch eine autarke Pumpeneinheit, die mittels Batteriemodul oder über Druckluftflaschen betrieben wird, hergestellt. Durch die Kombination solch eines Reservoirs mit den vorgenannten anderen Wasserreservoiren wird eine Langzeit-Wärmeabfuhr, auch bei Anfall von sehr hohen Nachzerfallswärmeleistungen im Wäscher, sichergestellt.

Zusammengefasst wird bei der Variante gemäß FIG. 7 die separate freiausblasende Venturidüse 94 mit einem zusätzlichen, strömungsmäßig nachgeschalteten Trockenfilter 118 versehen, der bevorzugt analog zu dem Trockenfilter 60 in den Varianten gemäß FIG. 2 bis 4 aufgebaut ist.

Die Venturidüse 94 wird dabei in einem abgeschlossenen Volumen untergebracht und lässt den eintretenden Teildampfstrom ungefiltert durch. Die Filterung wird dann temporär durch den stromabwärts angeordneten Trockenfilter 118 übernommen. Nachdem der Pool 26 die zur Vermeidung von Dampfkondensation erforderliche Temperatur erreicht hat, öffnet die beispielsweise mit einem Schmelzlot gesicherte Überströmöffnung 114, so dass die Venturidüse 94 nach kurzer Zeit mit Waschflüssigkeit 18 aus dem Pool 26 bespeist wird und selbsttätig die Gasreinigung vornimmt. Eine seitlich an der Umfassungswand 88 oberhalb der Waschflüssigkeit 18 angeordnete Bertscheibe 122 öffnet bei Erreichen eines höheren Betriebsdruckes, so dass der Gasstrom dann den Trockenfilter 118 umgeht (Bypass). Ab diesem Moment ist das Druckentlastungssystem dann in einem Betriebsmodus, den man von konventionellen Druckentlastungssystemen aus dem Stand der Technik kennt.

Die in FIG. 8 verwirklichten Lösungsansätze zur Vermeidung brennbarer Gasgemische im Ventingsystem 2 lassen sich schließlich wie folgt zusammenfassen:
Die beiden hier innerhalb einer Figur dargestellten Varianten heben das Problem des kurzzeitigen Vorkommens brennbarer Gasgemische auf, indem die Menge an Waschflüssigkeit, die aufgeheizt werden muss und dann der separierten Venturidüse 94 zugeführt wird, langsam kontinuierlich erhöht wird.

Der Ventingprozess kann mit einer trockenen Venturidüse oder mit einem gerade eben die Venturikehle überdeckenden kleinen Reservoir an Waschflüssigkeit begonnen werden. Diese minimale Waschflüssigkeitsmenge ist quasi nach einer sehr kurzen Zeit (typischerweise < 1 min) aufgewärmt auf ca. 85 bis 95 °C. Ab nun kann ein genau dimensionierter Massenstrom an weiterer Waschflüssigkeit zugeführt werden, so dass die Temperatur beibehalten werden kann und damit eine ausreichende Dampfinertisierung von ca. 50 Vol.-% aufrechterhalten wird. Bis zum Ende der Aufheizperiode, die dadurch charakterisiert ist, dass das gesamte zur Verfügung stehende, für die Autonomiezeit benötigte Reservoir an Waschflüssigkeit ein bestimmtes Temperaturniveau nicht unterschreitet, bleibt der aus dem umliegenden Pool zufließende Massenstrom an Waschflüssigkeit vorzugsweise passiv reguliert. Idealerweise ist ab diesem definierten Ende der Aufheizperiode der komplette Waschflüssigkeitsvorrat verfügbar und nutzbar.

In einer ersten Variante wird das Einfüllen der Waschflüssigkeit aus dem umliegenden Pool in das separierte Reservoir durch ein Schwimmerventil geregelt, welches den Füllstand im Reservoir auf ein notwendiges Minimum begrenzt und kontinuierlich Waschflüssigkeit nachspeist. Nach Erreichen einer definierten Temperatur innerhalb des separierten Reservoirs oder im umliegenden Pool öffnet ein temperaturabhängiger Öffnungsmechanismus, der den vorherigen Verschluss aufhebt.

In einer zweiten Variante erfolgt das Einfüllen über eine Drosselblende, welche die Zuströmrate derart begrenzt, dass der Füllstand im separierten Reservoir nur langsam ansteigt und die vorhandene Waschflüssigkeit ihr Temperaturniveau beibehält. Die Drossel wird vorteilhafterweise passiv freigegeben, sobald eine hinreichend hohe Initialtemperatur für Schmelzlot, Bimetall, Formgedächtnismetall, Thermostat oder einen ähnlichen Auslöser überschritten ist.

### Bezugszeichenliste

- 2: Ventingsystem
- 4: Kernkraftwerk
- 6: Containmenthülle
- 8: Containment
- 10: Ventstrom
- 12: Nasswäscher
- 14: Eintrittsöffnung
- 18: Waschflüssigkeit
- 20: Austrittsleitung
- 22: Behälter
- 24: Füllstandshöhe
- 26: Pool
- 28: Ventleitung
- 30: Behälterwand
- 32: Flüssigkeitsspiegel
- 34: Verteiler
- 38: Austrittsdüse
- 40: Venturidüse
- 42: Kehle
- 44: Durchtrittsöffnung
- 46: Austrittsöffnung
- 48: Gasraum
- 50: Metall-Faser-Filter
- 52: Molekularsieb-Filter
- 54: Zweigleitung
- 56: Austrittsöffnung
- 58: Verzweigung
- 60: Trockenfilter
- 62: Absperrventil
- 54: Steuerleitung
- 66: Pressure Pulse Transmitter
- 68: Steuerventil
- 70: Steuerleitung
- 72: Druckgasflasche
- 74: Primärleitung
- 76: Sekundärleitung
- 80: Austrittsdüse
- 82: Trennwand
- 84: Düsenkammer
- 86: Gasraum
- 88: Umfassungswand
- 90: Zweigleitung
- 92: Verzweigung
- 94: Venturidüse
- 96: Kehle
- 98: Waschflüssigkeit
- 100: Reservoir
- 102: Ringkammer
- 104: Wärmeleitrohr
- 106: Kapselung
- 108: Austrittsöffnung
- 110: Zwischenraum
- 112: Durchtritt
- 114: Überströmöffnung
- 116: Verschlussklappe
- 118: Trockenfilter
- 120: Überströmöffnung
- 122: Berstscheibe
- 124: Zuleitung
- 126: Berstscheibe
- 130: Reservoir
- 132: Waschflüssigkeit
- 134: Füllstandshöhe
- 136: Überströmleitung
- 138: Verschluss
- 140: Schwimmerventil
- 142: Schwimmer
- 144: Drossel

## Patentansprüche

1. Kerntechnische Anlage, insbesondere Kernkraftwerk (4), mit einem Containment (8) und mit einem Ventingsystem (2) zur gefilterten Druckentlastung des Containments (8), wobei
• das Ventingsystem (2) eine aus dem Containment (8) in die Umgebung geführte Ventleitung (28) aufweist, in die ein Nasswäscher (12) für den sich beim Venting einstellenden Ventstrom (10) geschaltet ist,
• der Nasswäscher (12) einen bereits während des Bereitschaftszustandes vor dem Venting mit einer Waschflüssigkeit (18) gefüllten Pool (26) aufweist, über dem sich ein Gasraum (48) befindet,
• die Ventleitung (28) eine in den Nasswäscher (12) geführte Eintrittsleitung (14) für den Ventstrom (10) umfasst, die sich in einem Verteiler (34) in eine Anzahl von Austrittsdüsen (38) verzweigt,
• die Austrittdüsen (38) zumindest teilweise in die Waschflüssigkeit (18) im Pool (26) eintauchen,
**dadurch gekennzeichnet, dass** zumindest eine separate Austrittsöffnung (56) innerhalb des Nasswäschers (12) vorhanden ist, die über eine Zweigleitung (54, 90) an die Eintrittsleitung (14) oder an den Verteiler (34) angeschlossen ist, und die zumindest während des Bereitschaftszustandes thermisch von der Waschflüssigkeit (18) im Pool (26) isoliert ist.

2. Kerntechnische Anlage nach Anspruch 1, wobei die separate Austrittsöffnung (56) zumindest während des Bereitschaftszustandes auch stofflich von der Waschflüssigkeit (18) im Pool (26) isoliert ist.

3. Kerntechnische Anlage nach Anspruch 1 oder 2, wobei die separate Austrittsöffnung (56) durch einen sie umgebenden Gasraum (48, 86) und/oder durch Trennwände (82) von der Waschflüssigkeit (18) im Pool (26) getrennt ist.

4. Kerntechnische Anlage nach einem der vorhergehenden Ansprüche, wobei die separate Austrittsöffnung (56) im Gasraum (48) oberhalb des Pools (26) angeordnet ist.

5. Kerntechnische Anlage nach Anspruch 4, wobei in die Zweigleitung (54) ein Trockenfilter (60) geschaltet ist.

6. Kerntechnische Anlage nach Anspruch 4 oder 5, wobei in die Zweigleitung (54) ein Absperrventil (62) geschaltet ist, welches im Bereitschaftszustand geöffnet ist und später durch passive Betätigungsmittel geschlossen wird, sobald die Temperatur der Waschflüssigkeit (18) im Pool (26) einen vorgegebenen Wert überschreitet.

7. Kerntechnische Anlage nach einem der Ansprüche 1 bis 3, wobei die separate Austrittsöffnung (56) durch eine in einer Düsenkammer (84) angeordnete Austrittsdüse (80) verwirklicht ist, und wobei die sich die Düsenkammer (84) in einem durch Trennwände (82) von der Waschflüssigkeit (18) im Pool (26) abgetrennten Raumbereich befindet.

8. Kerntechnische Anlage nach Anspruch 7, wobei die Austrittdüse (80) eine Venturidüse (94) ist und eine Kehle (96) aufweist, die mit einem Reservoir (100) für Waschflüssigkeit (98) in strömungstechnischer Verbindung steht.

9. Kerntechnische Anlage nach Anspruch 8, wobei das Reservoir (100) ein wesentlich geringeres Volumen als der Pool (26) hat.

10. Kerntechnische Anlage nach einem der Ansprüche 7 bis 9, wobei eine Anzahl von Wärmeübertragern, insbesondere Wärmeleitrohren (104), derart angeordnet ist, dass beim Venting in der Ventleitung (28) vorhandene Wärme auf die der Venturidüse (94) zugeführte Waschflüssigkeit übertragen wird.

11. Kerntechnische Anlage nach einem der Ansprüche 7 bis 10, wobei die Venturidüse (94) von einer Kapselung (106) umgeben ist, die eine weitgehende Rezirkulation von Waschflüssigkeit (18, 98) innerhalb der Kapselung (106) bewirkt.

12. Kerntechnische Anlage nach einem der Ansprüche 7 bis 11, wobei stromabwärts der separaten Austrittsdüse (80) ein Trockenfilter (118) in der Düsenkammer (84) angeordnet ist.

13. Kerntechnische Anlage nach einem der Ansprüche 7 bis 12, wobei in den die Düsenkammer (84) von der Waschflüssigkeit (18) im Pool (26) trennenden Trennwänden (82) mit Verschlussklappen (116) verschlossene Überströmöffnungen (114) zum Pool (26) hin vorhanden sind, und wobei passive Betätigungsmittel vorhanden sind, die die Verschlusskappen (116) öffnen, sobald die Temperatur der Waschflüssigkeit (18) im Pool (26) einen vorgegebenen Wert überschreitet.

14. Kerntechnische Anlage nach einem der Ansprüche 7 bis 13, wobei die separate Austrittsdüse (80) über eine Zuleitung (124) an den Verteiler (34) angeschlossen ist, und wobei in der Zuleitung (124) eine Bertscheibe (126) angeordnet ist, die die Zuleitung (124) während des Bereitschaftszustands verschließt und sich später durch den Druck den Ventstroms (10) öffnet.

15. Kerntechnische Anlage nach einem der vorhergehenden Ansprüche, wobei die in den Pool (26) eintauchenden Austrittsdüsen (38) als Venturidüsen (40) ausgebildet sind und jeweils eine Kehle (42) aufweisen, über die sie mit der Waschflüssigkeit (18) im Pool kommunizieren.

16. Kerntechnische Anlage nach einem der vorhergehenden Ansprüche, wobei der Nasswäscher (12) außerhalb des Containments (8) angeordnet ist.

17. Verfahren zum Betreiben einer kerntechnischen Anlage nach einem der vorhergehenden Ansprüche, wobei zumindest während des Anfahren des Ventingsystems (2) einer erster Teilstrom des Ventstroms (10) durch die in den Pool (26) eintauchenden Austrittsdüsen (38) geleitet wird und einer zweiter Teilstrom durch die separate Austrittsöffnung (56) geleitet wird.

18. Verfahren nach Anspruch 17, wobei das Verhältnis der Volumenströme des zweiten Teilstroms zum Gesamtstrom im Bereich von 10 bis 30 % liegt.

19. Verfahren nach Anspruch 17 oder 18, wobei nach Beendigung des Anfahrvorgangs die Isolierung der separaten Austrittsöffnung (56, 108) von der Waschflüssigkeit (18) im Pool (26) aufgehoben wird.

## Claims

1. A nuclear facility, in particular a nuclear power plant (4), having a containment (8) and having a venting system (2) for filtered pressure relief of the containment (8), wherein
• the venting system (2) comprises a venting line (28) leading from the containment (8) into the environment, into which a wet scrubber (12) is switched for the venting stream (10) arising during venting,
• the wet scrubber (12) comprises a pool (26) which is filled with a scrubbing fluid (18) already in the standby state prior to the venting and above which a gas chamber (48) is located,
• the venting line (28) comprises an inlet line (14) for the venting stream (10), which leads into the wet scrubber (12) and which branches in a distributor (34) into a number of outlet nozzles (38),
• the outlet nozzles (38) submerge, at least partially, into the scrubbing fluid (18) in the pool (26),
**characterized in that**
at least one separate outlet opening (56) is present inside the wet scrubber (12), which is connected via a branch line (54, 90) to the inlet line (14) or to the distributor (34) and which is, at least in the standby state, thermally insulated against the scrubbing fluid (18) in the pool (26).

2. The nuclear facility according to Claim 1, wherein the separate outlet opening (56) is also materially insulated against the scrubbing fluid (18) in the pool (26) at least in the standby state.

3. The nuclear facility according to Claim 1 or 2, wherein the separate outlet opening (56) is separated from the scrubbing fluid (18) in the pool (26) by a gas space (48, 86) surrounding it and/or by separating walls (82).

4. The nuclear facility according to any one of the preceding claims, wherein the separate outlet opening (56) is arranged in the gas space (48) above the pool (26).

5. The nuclear facility according to Claim 4, wherein a dry filter (60) is switched into the branch line (54).

6. The nuclear facility according to Claim 4 or 5, wherein a cut-off valve (62) is switched into the branch line (54), which is open in the standby state and later is closed by passive actuating means, as soon as the temperature of the scrubbing fluid (18) in the pool (26) exceeds a pre-set value.

7. The nuclear facility according to Claims 1 to 3, wherein the separate outlet opening (56) is realized by an outlet nozzle (80) arranged in a nozzle chamber (84), and wherein the nozzle chamber (84) is located in a spatial region separated by separating walls (82) from the scrubbing fluid (18) in the pool (26).

8. The nuclear facility according to Claim 7, wherein the outlet nozzle (80) is a venturi nozzle (94) and has a throat (96), which is fluidically connected to a reservoir (100) for scrubbing fluid (98).

9. The nuclear facility according to Claim 8, wherein the reservoir (100) has a much smaller volume than the pool (26).

10. The nuclear facility according to any one of Claims 7 to 9, wherein a number of heat transfer units, in particular, heat pipes (104), is arranged in such a manner that during the venting heat present in the venting line (28) is transferred to the scrubbing fluid supplied to the venturi nozzle (94).

11. The nuclear facility according to any one of Claims 7 to 10, wherein the venturi nozzle (94) is surrounded by an encapsulation (106), which brings about an extensive recirculation of scrubbing fluid (18, 98) within the encapsulation (106).

12. The nuclear facility according to any one of Claims 7 to 11, wherein a dry filter (118) is arranged in the nozzle chamber (84) downstream of the separate outlet nozzle (80).

13. The nuclear facility according to any one of Claims 7 to 12, wherein overflow openings (114) to the pool (26) closed with closure flaps (116) are present in the separating walls (82) separating the nozzle chamber (84) from the scrubbing fluid (18) in the pool (26), and wherein passive actuating means are present, which open the closure flaps (116), as soon as the temperature of the scrubbing fluid (18) in the pool (26) exceeds a pre-set value.

14. The nuclear facility according to any one of Claims 7 to 13, wherein the separate outlet nozzle (80) is connected via a supply line (124) to the distributor (34), and wherein a bursting disc (126) is arranged in the supply line (124), which closes the supply line (124) in the standby state and later opens due to the pressure of the venting stream (10).

15. The nuclear facility according to any one of the preceding claims, wherein the outlet nozzles (38) submerged in the pool (26) are designed as venturi nozzles (40) and each have a throat (42) via which they communicate with the scrubbing fluid (18) in the pool.

16. The nuclear facility according to any one of the preceding claims, wherein the wet scrubber (12) is arranged outside of the containment (8).

17. A method for operating a nuclear facility according to any one of the preceding claims, wherein at least during the start-up of the venting system (2) a first partial stream of the venting stream (10) is passed through the outlet nozzles (38) submerged in the pool (26) and a second partial stream is passed through the separate outlet opening (56).

18. The method according to Claim 17, wherein the ratio of the volume streams of the second partial stream to the total stream is in the range of 10 to 30%.

19. The method according to Claim 17 or 18, wherein after the completion of the start-up process the insulation of the separate outlet opening (56, 108) against the scrubbing fluid (18) in the pool (26) is cancelled.

## Revendications

1. Installation nucléaire, plus particulièrement centrale nucléaire (4), avec une enceinte de confinement (8) et avec un système de ventilation (2) pour la dépressurisation filtrée du confinement (8), dans lequel
• le système de ventilation (2) comprend une conduite de ventilation (28) guidée du confinement (8) vers l'environnement, dans laquelle est branché un dispositif de lavage par voie humide (12) pour le flux de ventilation (10) qui s'établit lors de la ventilation,
• le dispositif de lavage par voie humide (12) comprend un bassin (26) rempli dès l'état de veille, avant le lavage, d'un liquide de lavage (18), au-dessus duquel se trouve un compartiment à gaz (48),
• la conduite de ventilation (28) comprend une conduite d'entrée (14) pour le flux de ventilation (10) guidée dans le dispositif de lavage par voie humide (12) qui se divise, dans un répartiteur (34), en une pluralité de buses de sortie (38),
• les buses de sortie (38) plongent au moins partiellement dans le liquide de lavage (18) dans le bassin (26),
**caractérisée en ce que**
au moins une ouverture de sortie séparée (56) est présente à l'intérieur du dispositif de lavage par voie humide (12), qui est raccordée, par l'intermédiaire d'une conduite de dérivation (54, 90), à la conduite d'entrée (14) ou au répartiteur (34) et qui est isolée thermiquement, au moins pendant l'état de veille, du liquide de lavage (18) dans le bassin (26).

2. Installation nucléaire selon la revendication 1, dans laquelle l'ouverture de sortie séparée (56) est également isolée matériellement du liquide de lavage (18) dans le bassin (26) pendant l'état de veille.

3. Installation nucléaire selon la revendication 1 ou 2, dans laquelle l'ouverture de sortie séparée (56) est séparée du liquide de lavage (18) dans le bassin (26) par un compartiment à gaz (48, 86) et/ou par des cloisons (82).

4. Installation nucléaire selon l'une des revendications précédentes, dans laquelle l'ouverture de sortie séparée (56) est disposée dans le compartiment à gaz (48) au-dessus du bassin (26).

5. Installation nucléaire selon la revendication 4, dans laquelle un filtre à sec (60) est branché dans la conduite de dérivation (54).

6. Installation nucléaire selon la revendication 4 ou 5, dans laquelle une soupape d'arrêt (62) est branchée dans la conduite de dérivation (54), la soupape d'arrêt (62) étant ouverte dans l'état de veille et fermée plus tard par des moyens d'actionnement passifs dès que la température du liquide de lavage (18) dans le bassin (26) dépasse une valeur prédéterminée.

7. Installation nucléaire selon l'une des revendications 1 à 3, dans laquelle l'ouverture de sortie séparée (56) est réalisée par une buse de sortie (80) disposée dans une chambre à buse (84) et dans laquelle la chambre à buse (84) se trouve dans une zone isolée par des cloisons (82) du liquide de lavage (18) dans le bassin (26).

8. Installation nucléaire selon la revendication 7, dans laquelle la buse de sortie (80) est une buse Venturi (94) et comprend une gorge (96) qui est reliée par écoulement avec un réservoir (100) pour liquide de lavage (98).

9. Installation nucléaire selon la revendication 8, dans laquelle le réservoir (100) présente un volume nettement plus faible que le bassin (26).

10. Installation nucléaire selon l'une des revendications 7 à 9, dans laquelle une pluralité d'échangeurs thermiques, plus particulièrement des tubes conducteurs de chaleur (104), sont disposés de façon à ce que, lors de la ventilation, la chaleur présente dans la conduite de ventilation (28) soit transmise au liquide de lavage introduit dans la buse Venturi (94).

11. Installation nucléaire selon l'une des revendications 7 à 10, dans laquelle la buse Venturi (94) est entourée d'une encapsulation (106) qui permet une large remise en circulation du liquide de lavage (18, 98) à l'intérieur de l'encapsulation (106).

12. Installation nucléaire selon l'une des revendications 7 à 11, dans laquelle un filtre à sec (118) est disposé dans la chambre à buse (84) en aval de la buse de sortie séparée (80).

13. Installation nucléaire selon l'une des revendications 7 à 12, dans laquelle, dans les cloisons (82) séparant la chambre à buses (84) du liquide de lavage (18) dans le bassin (26), existent des ouvertures de trop-plein (114) obturées par rapport au bassin (26) avec des clapets d'obturation (116) et dans laquelle des moyens d'actionnement passifs sont présents, qui ouvrent les clapets d'obturation (116) dès que la température du liquide de lavage (18) dans le bassin (26) dépasse une valeur prédéterminée.

14. Installation nucléaire selon l'une des revendications 7 à 13, dans laquelle la buse de sortie séparée (80) est raccordée, par l'intermédiaire d'une conduite d'alimentation (124), au répartiteur (34) et dans laquelle, dans la conduite d'alimentation (124), est disposé un disque de rupture (126) qui obture la conduite d'alimentation (124) pendant l'état de veille et s'ouvre plus tard sous l'effet de la pression du flux de ventilation (10).

15. Installation nucléaire selon l'une des revendications précédentes, dans laquelle les buses de sortie (38) plongeant dans le bassin (26) sont conçues comme des buses Venturi (40) et comprennent chacune une gorge (42) par l'intermédiaire de laquelle elles communiquent avec le liquide de lavage (18) dans le bassin.

16. Installation nucléaire selon l'une des revendications précédentes, dans laquelle le dispositif de lavage par voie humide (12) est disposé à l'extérieur de l'enceinte de confinement (8).

17. Procédé d'exploitation d'une installation nucléaire selon l'une des revendications précédentes, dans lequel, au moins pendant le démarrage du système de ventilation (2), un premier flux partiel du flux de ventilation (10) est guidé à travers les buses de sortie (38) plongeant dans le bassin (26) et un deuxième flux partiel est guidé à travers l'ouverture de sortie séparée (56).

18. Procédé selon la revendication 17, dans lequel le rapport entre les débits volumiques du deuxième flux partiel et le flux total est de l'ordre de 10 à 30 %.

19. Procédé selon la revendication 17 ou 18, dans lequel, après la fin du processus de démarrage, l'isolation de l'ouverture de sortie séparée (56, 108) du liquide de lavage (18) dans le bassin (26) est supprimée.
